(19) Europäisches Patentamt
European Patent Office
Office européen des brevets

(11) **EP 2 746 754 A2**

(12) **EUROPEAN PATENT APPLICATION**

(43) Date of publication:
25.06.2014  Bulletin 2014/26

(51) Int Cl.:
*G01N 23/04* (2006.01)

(21) Application number: 13199391.7

(22) Date of filing: 23.12.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 24.12.2012  AU 2012268876

(71) Applicant: CANON KABUSHIKI KAISHA
Ohta-ku
Tokyo 146-8501 (JP)

(72) Inventors:
• Bone, Donald James
Wentworth Falls, New South Wales 2782 (AU)

• Wong, Sampson Sze Chung
Dundas, New South Wales 2117 (AU)
• Larkin, Kieran Gerard
Putney, New South Wales 2112 (AU)
• Pan, Ruimin
Macquarie Park, New South Wales 2113 (AU)

(74) Representative: Walker, Philip Martin
Canon Europe Ltd
European Patent Department
3 The Square
Stockley Park
Uxbridge, Middlesex UB11 1ET (GB)

(54) **Non-linear solution for 2D phase shifting**

(57)    Disclosed is a method of reconstructing a representative detailed phase image from a set of fringe pattern interferogram images of an object. The images are captured by an x-ray interferometer having a crossed diffraction grating. A set of captured fringe pattern interferogram images from the x-ray interferometer are provided, the set comprising no more than eight captured fringe pattern interferogram images. The method determines an estimate of an absorption parameter ($a$), two-dimensional amplitude modulation parameters ($m_x$, $m_y$), and two-dimensional phase modulation parameters ($\xi_x$ and $\xi_y$) from a closed-form solution using the received set of captured fringe pattern interferogram images, and reconstructs the representative detailed phase image using the parameter estimates.

Fig. 4

EP 2 746 754 A2

**Description**

**REFERENCE TO RELATED PATENT APPLICATION(S)**

This application claims the benefit under 35 U.S.C. §119 of the filing date of Australian Patent Application No. 2012268876 filed December 24, 2013, hereby incorporated by reference in its entirety as if fully set forth herein.

**TECHNICAL FIELD**

The current invention relates to the demodulation of the phase information from a set of fringe pattern interferogram images obtained from X-ray Talbot interferometers with crossed gratings.

**BACKGROUND**

In the last century or so a large number of techniques have been developed to make (normally invisible) phase variations visible in imaging devices. These techniques include: Zernike phase contrast, Nomarski differential interference contrast, generalized phase contrast, Foucault knife edge, schlieren, shadowgraph, dark-field and wire-test. More recently there has been progress in extending some of these techniques to X-ray imaging. A number of new phase-contrast techniques have been developed for the particularly difficult nature of X-rays, arising primarily from the difficulty of focusing and imaging X-ray beams. These techniques include TIE (Transport of Intensity Equation) phase contrast imaging and ptychography. Another such technique is known as "X-ray Talbot moiré interferometry" (XTMI), that yields intermediate images which encode one or more differential phase images. The XTMI method when implemented using simple linear gratings gives one differential phase image. XTMI implemented with two dimensional (crossed) gratings yields two (crossed or orthogonal) differential phase images.

Phase shifting methods are well known and have been used extensively for the analysis of interferometric fringe patterns. Phase shift interferometry (PSI) was first introduced in 1974. PSI involves moving the reference mirror in small linear increments and storing the interferogram image at each step. The value of each point in the interferogram image and the amount of artificially introduced phase shift are used to calculate corresponding optical path length variation of that point. Phase shifting techniques with multiple sinusoidal components have also been proposed.

Phase shifting methods have also been applied to x-ray Talbot moiré interferometry. With linear gratings, which are only sensitive to one gradient direction, it is known that if higher harmonics can be ignored, then a minimum of three images are required to recover the low frequency background intensity, the fringe modulation amplitude and the phase parameters, at a point in the image. However this system is only sensitive to the differential behaviour orthogonal to the grating. Rotating the grating and taking a further two exposures allows the differential phase and modulation parameters in the orthogonal direction to be obtained with a total of only five exposures. Mechanically, this is complex and required a rotation of the grating by 90° during the measurement.

Crossed or two-dimension (2D) gratings allow the system to be sensitive to the differential phase and the modulation in two orthogonal directions at the same time. Mathematical models of the imaging process for X-ray Talbot systems with crossed gratings using phase shifting assume that the captured intensity, $Z_n$, in the $n^{th}$ image in the sequence at a pixel can be represented in the form

$$Z_n = a + m_{1,0}\cos\left(\xi_{1,0} + \phi_{1,0,n}\right) + m_{0,1}\cos\left(\xi_{0,1} + \phi_{0,1,n}\right)$$
$$+ m_{1,-1}\cos\left(\xi_{1,-1} + \phi_{1,-1,n}\right) + m_{-1,1}\cos\left(\xi_{-1,1} + \phi_{-1,1,n}\right) \tag{1}$$

where $a$ is a low frequency background intensity, the second term, $m_{1,0}\cos(\xi_{1,0} + \phi_{1,0,n})$, is a modulated sinusoid with modulation strength $m_{1,0}$ and a phase induced by the object, $\xi_{1,0}$ and an imposed phase step $\phi_{1,0,n}$. This modulated sinusoid arises from one element of the pair of gratings that form the crossed grating. The third term has the same general form but arises from the second element of the crossed grating. The fourth and fifth terms appear similar in form but arise from interactions of the second and third terms. As such the phase steps, ($\phi_{1,-1,n}$ and $\phi_{-1,1,n}$ are not independently imposed but arise from the first two terms as

$$\phi_{1,1,n} = \phi_{1,0,n} + \phi_{0,1,n}$$
$$\phi_{1,-1,n} = \phi_{1,0,n} - \phi_{0,1,n} \qquad (2)$$

This formulation of the intensity has nine unknown parameters, so at least nine phase-stepped images, producing nine intensity values ($Z_1$ to $Z_9$) associated with nine equations are required to solve for the nine unknowns. A need exists for methods that can reduce the number of phase steps below the currently limit of 9 steps.

Recently, other researchers have proposed a model with fewer parameters for a windowed Fourier Transform (WFT) based analysis of x-ray Talbot moiré interferograms. This could be adapted to a phase shifting method and analysis. In the context of a phase shifting method, this simplified model would take the form

$$Z_n = a + b\big(1 - \cos(\xi_{1,0} + \phi_{1,0,n})\big)\big(1 - \cos(\xi_{0,1} + \phi_{0,1,n})\big) \qquad (3)$$

However, though this model has fewer parameters, it forces the modulation amplitude b of the two crossed cosine terms to be the same. This is not true in practice. There is a need therefore for a simplified model that better fits the behaviour of real x-ray Talbot moiré interferograms.

Another problem with phase shifting methods for crossed grating x-ray Talbot moiré interferometry is that the phase steps must have the precise values imposed by the model used in order to fit the observations. Any variation in the phase step from the nominal phase step required by the analysis will induce errors in the resulting parameters recovered by the analysis since the analysis methods explicitly assume the nominal phase steps. However, because the phase steps are produced by very small mechanical movements in the system, significant errors typically occur in the resulting phase steps. Although there are known methods for correcting for these phase step errors for interferometric phase shifting with one-dimensional (1D) fringe systems, there are no known methods for correcting for phase step errors for crossed grating x-ray Talbot moiré interferometry. A need exists for a method of analysis for these systems that can correct for these phase errors.

## SUMMARY

Disclosed is a method of reconstructing a representative detailed phase image from a set of fringe pattern interferogram images of an object. The images are captured by an x-ray interferometer having a crossed diffraction grating. A set of captured fringe pattern interferogram images from the x-ray interferometer are provided, the set comprises no more than eight captured fringe pattern interferogram images. The method determines an estimate of an absorption parameter (*a*), two-dimensional amplitude modulation parameters ($m_x$, $m_y$), and two-dimensional phase modulation parameters ($\xi_x$ and $\xi_y$) from an appropriate closed-form solution using the received set of captured fringe pattern interferogram images, and reconstructs the representative detailed phase image using the parameter estimates.

Desirably the determining step revises the parameter estimates. Preferably the parameter estimates for each pixel are revised by generating a simulated set of fringe intensities for that pixel and comparing the simulated set of fringe intensities with the set of captured fringe intensities at that pixel. Alternatively the parameter estimates for each pixel are revised by generating a simulated set of fringe intensities for that pixel and minimising an error in corresponding pixels in the simulate set of fringe intensities and the set of captured fringe intensities. (Gauss-Newton Eqn 27)

In a particular implementation, the determining step (220) comprises: obtaining (310) an initial estimate of the parameters; using (320) a phase estimation method to correct phase step errors in the parameters; and iteratively (330) determining an optimal solution (Eqn 27) for the parameters using the corrected phase steps.

In specific implementations, the set comprises:

[0015] - 5 captured fringe pattern interferogram images and the phase steps of the crossed diffraction grating are $\phi_x$: [0, $2\pi/5$, $4\pi/5$, $6\pi/5$, $8\pi/5$] and $\phi_y$: [0, $6\pi/5$, $2\pi/5$, $8\pi/5$, $4\pi/5$];

- 6 captured fringe pattern interferogram images and the phase steps of the crossed diffraction grating are $\phi_x$: [0, $\pi/2$, $\pi/2$, $\pi$, $\pi$, $3\pi/2$] and $\phi_y$: [$\pi/2$, 0, $\pi$, $\pi/2$, $3\pi/2$, $\pi$];
- 7 captured fringe pattern interferogram images and the phase steps of the crossed diffraction grating are $\phi_x$: [0, $\pi/2$, $\pi$, $3\pi/2$, 0, $\pi/2$, $\pi$] and $\phi_y$: [0, $3\pi/2$, $\pi$, $\pi/2$, $\pi$, $\pi/2$, 0]; or
- 8 images captured fringe pattern interferogram images and the phase steps of the crossed diffraction grating are $\phi_x$: [0, $\pi/2$, $\pi$, $3\pi/2$, 0, $\pi/2$, $\pi$, $3\pi/2$] and $\phi_y$: [0, $3\pi/2$, $\pi$, $\pi/2$, $\pi$, $\pi/2$, 0, $3\pi/2$].

In another aspect, disclosed is a method of reconstructing a representative detailed phase image from a set of fringe pattern interferogram images of an object captured by an x-ray interferometer having a crossed diffraction grating. This method comprises providing a set of captured images; providing a reconstruction technique capable of reconstructing the image from no more than eight images by relating cross components associated with the fringe pattern to the principle components associated with the fringe pattern; and reconstructing the representative detailed phase image from the provided set of captured images using the provided reconstruction technique.

Other aspects are disclosed.

## BRIEF DESCRIPTION OF THE DRAWINGS

At least one embodiment of the present invention will now be described with reference to the following drawings, in which:

Fig. 1 is a schematic flow diagram illustrating a method of phase demodulation for fringe pattern interferogram images according to one implementation;

Fig. 2 is a schematic flow diagram illustrating a method of phase demodulation for fringe pattern interferogram images according to a further implementation;

Fig. 3 is a schematic flow diagram depicting the details of the iterative phase demodulation method from Fig. 2;

Fig. 4 schematically depicts an experimental set-up for an X-ray Talbot interferometer relevant to the arrangements described;

Figs. 5A-5C illustrate an examples of the gratings and the self-image described in Fig. 4;

Fig. 6 is a schematic flow diagram exemplifying detail of the image capture process described in Fig. 1 and Fig. 2;

Fig. 7 illustrated the phase shift pattern of a 9-step image capture process;

Fig. 8 illustrated the phase shift pattern of an 8-step image capture process;

Fig. 9 illustrated the phase shift pattern of another 8-step image capture process;

Fig. 10 illustrated the phase shift pattern of a 7-step image capture process;

Fig. 11 illustrated the phase shift pattern of a 6-step image capture process;

Fig. 12 illustrated the phase shift pattern of a 5-step image capture process;

Figs. 13A and 13B form a schematic block diagram of a general purpose computer system upon which arrangements described can be practiced;

## DETAILED DESCRIPTION INCLUDING BEST MODE

### Context

The present disclosure relates to extracting phase information from a set of interferogram images obtained from an X-ray Talbot interferometry system using a phase shifting technique.

An X-ray Talbot interferometry system captures fringe patterns generated by an object through a number of gratings using the Talbot effect in order to recover information about the object. Because this type of X-ray imaging uses phase differences instead of absorption to produce contrast, the accuracy is higher than regular X-ray imaging.

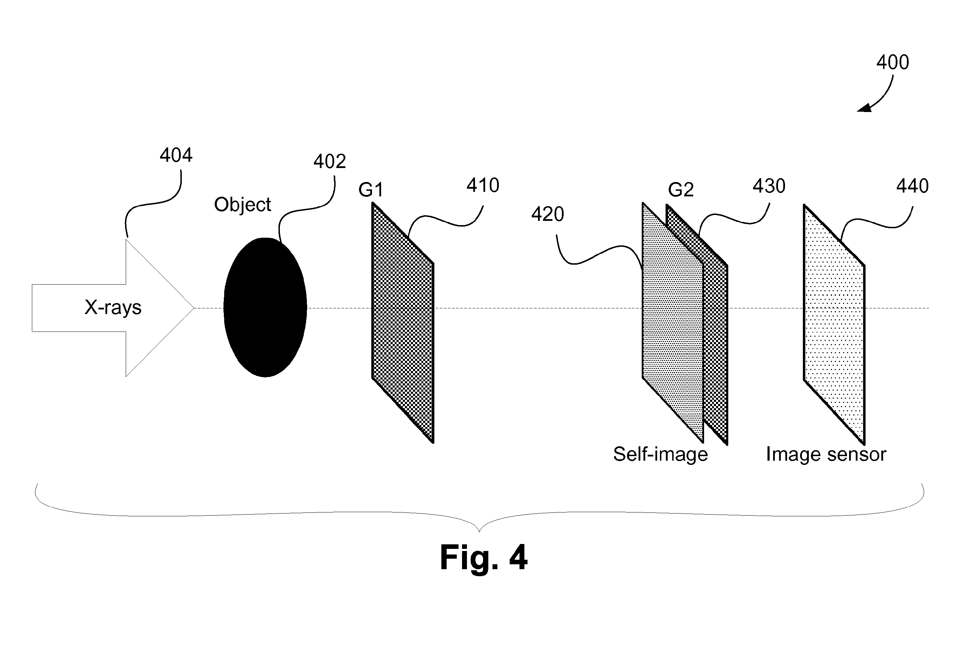

An X-ray Talbot interferometry (XTI) system 400 is shown in Fig. 4, where a phase grating G1 (410) and an object 402 being imaged are both illuminated by X-rays. A self-image 420 is formed at a position behind the phase grating G1 due to Talbot effect. Since the phase of the X-ray wave is perturbed by the object 402, the self-image 420 is deformed. By analysing the deformed self-image, the characteristics of the object 402 can be deduced. In Fig. 4, an absorption grating G2 (430) is placed at the position of the self-image 420 to generate a moiré fringe pattern. An image sensor 440 is proximate to the absorption grating 430 and configured to capture the moiré fringe pattern. The period of the absorption grating G2 (430) is configured to be similar to that of the self-image 420 so the moiré pattern generated by superposing the self-image 420 and the absorption grating G2 (430) amplifies the intensity changes of the self-image permitting the image sensor 440 to more readily resolve the pattern.

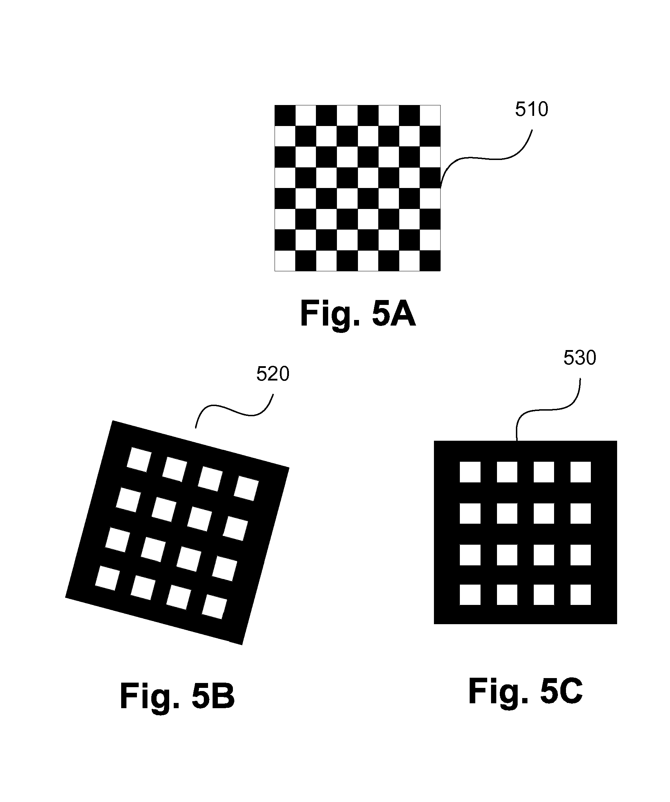

The gratings G1 (410) and G2 (430) used in the X-ray interferometry system 400 have 2D structures as illustrated in Figs. 5A-5C. In Fig. 5A, 510 demonstrates a common design for the phase grating G1 (410), in which the dark areas represent regions on G1 (410) where a phase shift of $\pi$ is imposed, the bright areas represent regions on G1 (410) where no phase shift is imposed. In Fig. 5B, 520 demonstrates a common design for the absorption grating G2 (430), where the dark areas represent regions on G2 (430) that absorb most of the X-ray energy, the bright areas represent regions on G2 (430) that let the X-ray energy pass through the grating 430. The example 520 of G2 (430) shown is slightly tilted for the purpose of generating moiré patterns. X-ray Talbot interferometry systems may be configured differently to the one described in Fig. 4, but generally represent variations of the system in Fig. 4. In Fig. 5C, 530 shows an illustration of an exemplary self-image 420 for the system 400 absent the object 402. By superposing the self-image 420 and the absorption grating G2 (430) with G2 having similar structure to the self-image 420 and rotated a small angle, a moiré pattern is produced. The phase information of the object 402 in Fig. 4 remains in the moiré pattern but is present at a much lower frequency compared to the self-image 420. Where the image sensor 440 has only limited resolution ability, such can be sufficient to resolve the magnified self-image, and for the phase information of the object to then be recovered.

In the XTI system described in Fig. 4, a phase shifting technique may be applied to recover the absorption, amplitude modulation and phase modulation caused by the object. A set of images are captured with the gratings shifted between each capture so that temporal samples along the optical path are obtained through spatial shifts of the moiré pattern. The phase shifting technique will be described in detail later in this document.

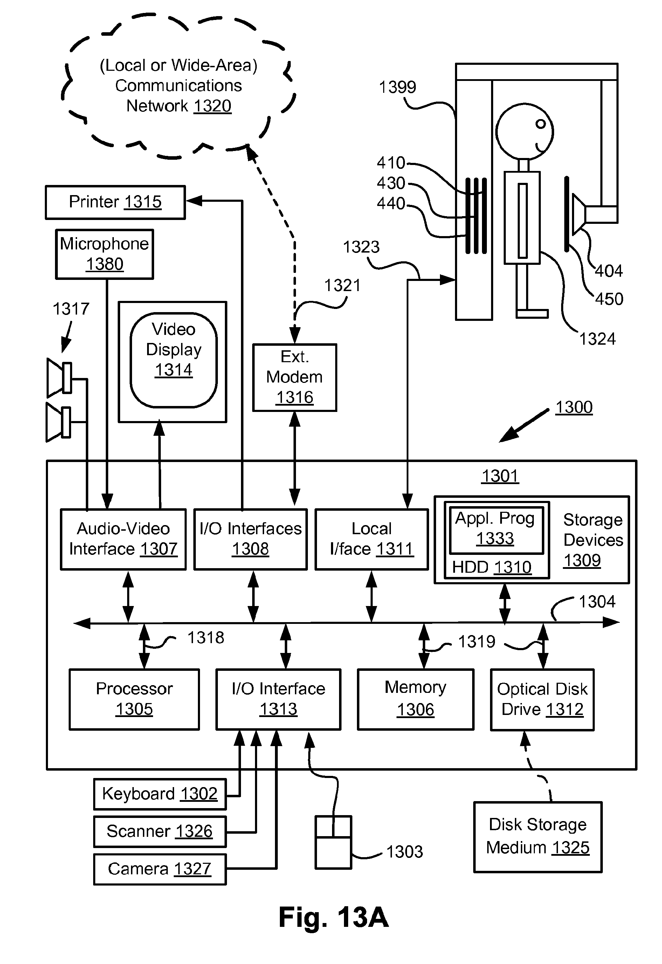

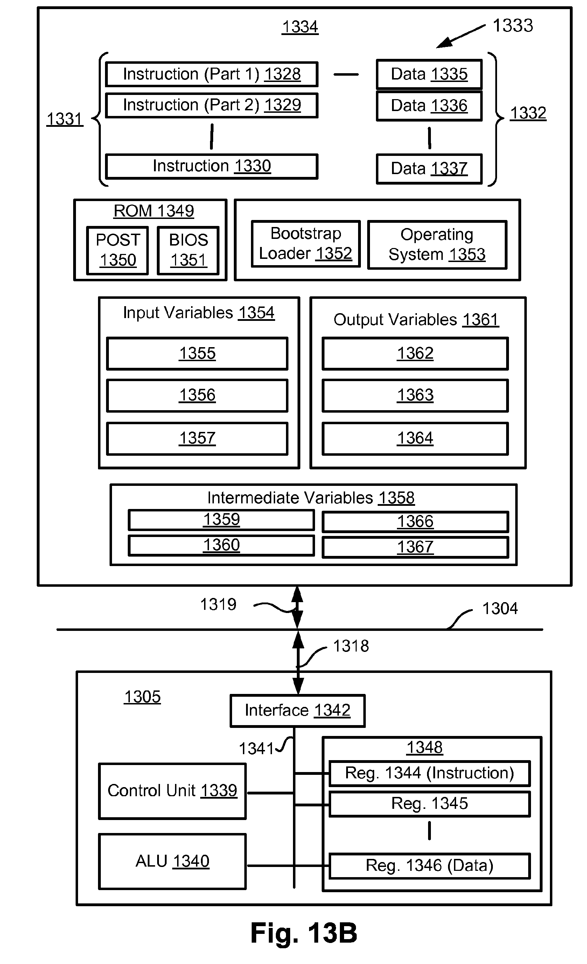

Figs. 13A and 13B depict a general-purpose computer system 1300, upon which the various arrangements to be described can be practiced.

As seen in Fig. 13A, the computer system 1300 includes: a computer module 1301; input devices such as a keyboard 1302, a mouse pointer device 1303, a scanner 1326, a camera 1327, and a microphone 1380; and output devices including a printer 1315, a display device 1314 and loudspeakers 1317. The computer module 1301 is also shown coupled via a connection 1323 to an X-ray apparatus 1399 configured according to the arrangement of Fig. 4. As illustrated, the X-ray apparatus 1399 is configured for imaging the torso of a subject 1324, representing the object 402 of Fig. 4. An external Modulator-Demodulator (Modem) transceiver device 1316 may be used by the computer module 1301 for communicating to and from a communications network 1320 via a connection 1321. The communications network 1320 may be a wide-area network (WAN), such as the Internet, a cellular telecommunications network, a private WAN, or a local-area-network (LAN). Where the connection 1321 is a telephone line, the modem 1316 may be a traditional "dial-up" modem. Alternatively, where the connection 1321 is a high capacity (e.g., cable) connection, the modem 1316 may be a broadband modem. A wireless modem may also be used for wireless connection to the communications network 1320.

The computer module 1301 typically includes at least one processor unit 1305, and a memory unit 1306. For example, the memory unit 1306 may have semiconductor random access memory (RAM) and semiconductor read only memory (ROM). The computer module 1301 also includes an number of input/output (I/O) interfaces including: an audio-video interface 1307 that couples to the video display 1314, loudspeakers 1317 and microphone 1380; an I/O interface 1313 that couples to the keyboard 1302, mouse 1303, scanner 1326, camera 1327 and optionally a joystick or other human interface device (not illustrated); and an interface 1308 for the external modem 1316 and printer 1315. In some implementations, the modem 1316 may be incorporated within the computer module 1301, for example within the interface 1308. The computer module 1301 also has a local interface 1311, which permits coupling of the computer system 1300 via the connection 1323 to the X-ray apparatus 1399. The interfaces 1308 and 1311 may be configured to operate on respective standards, such as Ethernet™, a Bluetooth™ wireless arrangement or an IEEE 802.11 wireless arrangement; however, numerous other types of interfaces may be practiced. The connection 1323 is typically bidirectional enabling automated X-ray image capture by the apparatus 1399 under direction of the computer 1301 and for the communication of captured image data to the computer 1301 for storage in the memory 1306 or HDD 1310.

The I/O interfaces 1308 and 1313 may afford either or both of serial and parallel connectivity, the former typically being implemented according to the Universal Serial Bus (USB) standards and having corresponding USB connectors (not illustrated). Storage devices 1309 are provided and typically include a hard disk drive (HDD) 1310. Other storage devices such as a floppy disk drive and a magnetic tape drive (not illustrated) may also be used. An optical disk drive 1312 is typically provided to act as a non-volatile source of data. Portable memory devices, such optical disks (e.g., CD-ROM, DVD, Blu ray Disc™), USB-RAM, portable, external hard drives, and floppy disks, for example, may be used as appropriate sources of data to the system 1300.

The components 1305 to 1313 of the computer module 1301 typically communicate via an interconnected bus 1304 and in a manner that results in a conventional mode of operation of the computer system 1300 known to those in the relevant art. For example, the processor 1305 is coupled to the system bus 1304 using a connection 1318. Likewise, the memory 1306 and optical disk drive 1312 are coupled to the system bus 1304 by connections 1319. Examples of computers on which the described arrangements can be practised include IBM-PC's and compatibles, Sun Sparcstations, Apple Mac™ or a like computer systems.

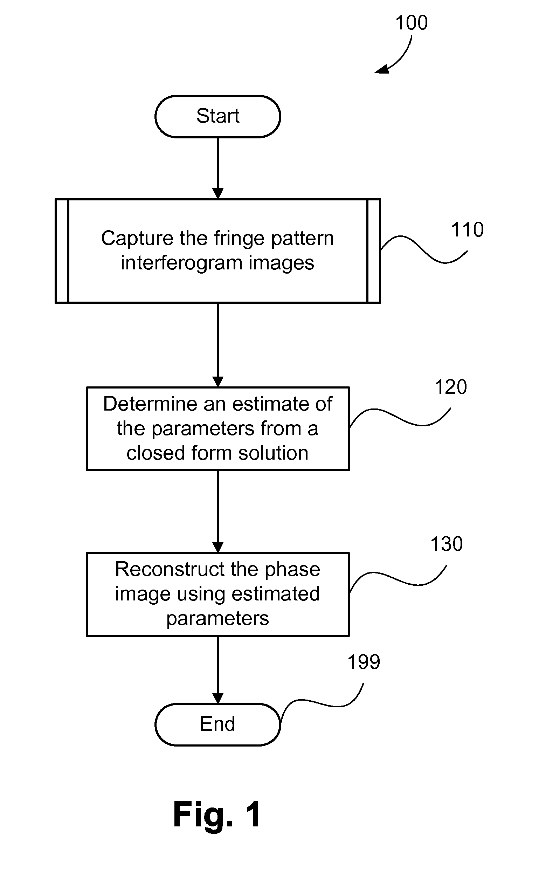

The methods of phase demodulation may be implemented using the computer system 1300 wherein the processes of Figs. 1 to 12, to be described, may be implemented as one or more software application programs 1333 executable within the computer system 1300. In particular, the steps of the methods of phase demodulation are effected by instructions 1331 (see Fig. 13B) in the software 1333 that are carried out within the computer system 1300. The software instructions 1331 may be formed as one or more code modules, each for performing one or more particular tasks. The software may also be divided into two separate parts, in which a first part and the corresponding code modules performs the phase demodulation methods and a second part and the corresponding code modules manage a user interface between the first part and the user.

The software may be stored in a computer readable medium, including the storage devices described below, for example. The software is loaded into the computer system 1300 from the computer readable medium, and then executed by the computer system 1300. A computer readable medium having such software or computer program recorded on the computer readable medium is a computer program product. The use of the computer program product in the computer system 1300 preferably effects an advantageous apparatus for X-ray imaging and image processing, particularly for phase demodulation of interferogram fringe patterns.

The software 1333 is typically stored in the HDD 1310 or the memory 1306. The software is loaded into the computer system 1300 from a computer readable medium, and executed by the computer system 1300. Thus, for example, the software 1333 may be stored on an optically readable disk storage medium (e.g., CD-ROM) 1325 that is read by the optical disk drive 1312. A computer readable medium having such software or computer program recorded on it is a computer program product. The use of the computer program product in the computer system 1300 preferably effects an apparatus for X-ray imaging and image processing, particularly for phase demodulation of interferogram fringe patterns.

In some instances, the application programs 1333 may be supplied to the user encoded on one or more CD-ROMs 1325 and read via the corresponding drive 1312, or alternatively may be read by the user from the network 1320. Still further, the software can also be loaded into the computer system 1300 from other computer readable media. Computer readable storage media refers to any non-transitory tangible storage medium that provides recorded instructions and/or data to the computer system 1300 for execution and/or processing. Examples of such storage media include floppy disks, magnetic tape, CD-ROM, DVD, Blu-ray Disc™, a hard disk drive, a ROM or integrated circuit, USB memory, a magneto-optical disk, or a computer readable card such as a PCMCIA card and the like, whether or not such devices are internal or external of the computer module 1301. Examples of transitory or non-tangible computer readable transmission media that may also participate in the provision of software, application programs, instructions and/or data to the computer module 1301 include radio or infra-red transmission channels as well as a network connection to another computer or networked device, and the Internet or Intranets including e-mail transmissions and information recorded on Websites and the like.

The second part of the application programs 1333 and the corresponding code modules mentioned above may be executed to implement one or more graphical user interfaces (GUIs) to be rendered or otherwise represented upon the display 1314. Through manipulation of typically the keyboard 1302 and the mouse 1303, a user of the computer system 1300 and the application may manipulate the interface in a functionally adaptable manner to provide controlling commands and/or input to the applications associated with the GUI(s). Other forms of functionally adaptable user interfaces may also be implemented, such as an audio interface utilizing speech prompts output via the loudspeakers 1317 and user voice commands input via the microphone 1380.

Fig. 13B is a detailed schematic block diagram of the processor 1305 and a "memory" 1334. The memory 1334 represents a logical aggregation of all the memory modules (including the HDD 1309 and semiconductor memory 1306) that can be accessed by the computer module 1301 in Fig. 13A.

When the computer module 1301 is initially powered up, a power-on self-test (POST) program 1350 executes. The POST program 1350 is typically stored in a ROM 1349 of the semiconductor memory 1306 of Fig. 13A. A hardware device such as the ROM 1349 storing software is sometimes referred to as firmware. The POST program 1350 examines hardware within the computer module 1301 to ensure proper functioning and typically checks the processor 1305, the memory 1334 (1309, 1306), and a basic input-output systems software (BIOS) module 1351, also typically stored in the ROM 1349, for correct operation. Once the POST program 1350 has run successfully, the BIOS 1351 activates the hard disk drive 1310 of Fig. 13A. Activation of the hard disk drive 1310 causes a bootstrap loader program 1352 that is resident on the hard disk drive 1310 to execute via the processor 1305. This loads an operating system 1353 into the RAM memory 1306, upon which the operating system 1353 commences operation. The operating system 1353 is a system level application, executable by the processor 1305, to fulfil various high level functions, including processor management, memory management, device management, storage management, software application interface, and generic user interface.

The operating system 1353 manages the memory 1334 (1309, 1306) to ensure that each process or application running on the computer module 1301 has sufficient memory in which to execute without colliding with memory allocated to another process. Furthermore, the different types of memory available in the system 1300 of Fig. 13A must be used properly so that each process can run effectively. Accordingly, the aggregated memory 1334 is not intended to illustrate how particular segments of memory are allocated (unless otherwise stated), but rather to provide a general view of the memory accessible by the computer system 1300 and how such is used.

As shown in Fig. 13B, the processor 1305 includes a number of functional modules including a control unit 1339, an arithmetic logic unit (ALU) 1340, and a local or internal memory 1348, sometimes called a cache memory. The cache memory 1348 typically includes a number of storage registers 1344 - 1346 in a register section. One or more internal busses 1341 functionally interconnect these functional modules. The processor 1305 typically also has one or more interfaces 1342 for communicating with external devices via the system bus 1304, using a connection 1318. The memory 1334 is coupled to the bus 1304 using a connection 1319.

The application program 1333 includes a sequence of instructions 1331 that may include conditional branch and loop instructions. The program 1333 may also include data 1332 which is used in execution of the program 1333. The instructions 1331 and the data 1332 are stored in memory locations 1328, 1329, 1330 and 1335, 1336, 1337, respectively. Depending upon the relative size of the instructions 1331 and the memory locations 1328-1330, a particular instruction may be stored in a single memory location as depicted by the instruction shown in the memory location 1330. Alternately, an instruction may be segmented into a number of parts each of which is stored in a separate memory location, as depicted by the instruction segments shown in the memory locations 1328 and 1329.

In general, the processor 1305 is given a set of instructions which are executed therein. The processor 1305 waits for a subsequent input, to which the processor 1305 reacts to by executing another set of instructions. Each input may be provided from one or more of a number of sources, including data generated by one or more of the input devices 1302, 1303, data received from an external source across one of the networks 1320, 1302, data retrieved from one of the storage devices 1306, 1309 or data retrieved from a storage medium 1325 inserted into the corresponding reader 1312, all depicted in Fig. 13A. The execution of a set of the instructions may in some cases result in output of data. Execution may also involve storing data or variables to the memory 1334.

The disclosed image processing arrangements use input variables 1354, which are stored in the memory 1334 in corresponding memory locations 1355, 1356, 1357. The image processing arrangements produce output variables 1361, which are stored in the memory 1334 in corresponding memory locations 1362, 1363, 1364. Intermediate variables 1358 may be stored in memory locations 1359, 1360, 1366 and 1367.

Referring to the processor 1305 of Fig. 13B, the registers 1344, 1345, 1346, the arithmetic logic unit (ALU) 1340, and the control unit 1339 work together to perform sequences of micro-operations needed to perform "fetch, decode, and execute" cycles for every instruction in the instruction set making up the program 1333. Each fetch, decode, and execute cycle comprises:

(i) a fetch operation, which fetches or reads an instruction 1331 from a memory location 1328, 1329, 1330;
(ii) a decode operation in which the control unit 1339 determines which instruction has been fetched; and
(iii) an execute operation in which the control unit 1339 and/or the ALU 1340 execute the instruction.

Thereafter, a further fetch, decode, and execute cycle for the next instruction may be executed. Similarly, a store cycle may be performed by which the control unit 1339 stores or writes a value to a memory location 1332.

Each step or sub-process in the processes of Figs. 1 to 12 is associated with one or more segments of the program 1333 and is performed by the register section 1344, 1345, 1347, the ALU 1340, and the control unit 1339 in the processor 1305 working together to perform the fetch, decode, and execute cycles for every instruction in the instruction set for the noted segments of the program 1333.

The methods of image processing may alternatively be implemented in whole or part using dedicated hardware such as one or more integrated circuits performing the functions or sub functions of image processing. Such dedicated hardware may include graphic processors, digital signal processors, or one or more microprocessors and associated memories.

**Overview**

The gratings used in crossed grating X-ray Talbot moiré interferometry are created by etching holes in silicon wafers. The accuracy constraints on the fabrication process means that these holes tend to be more round than the ideal square profile, such as depicted in Fig. 5. Although the square profile is not practically achievable it does make a convenient starting point for the analysis.

In addressing the problems discussed above, it is desired to impose a strong constraint on the relationship between the interferometric primary terms and cross terms so that that the constrained relationship can be used to reduce the number of frames required by the phase shifting process.

*Mathematical models*

As a first step to reducing the number of free parameters required to represent the intensity at a given pixel in the moiré interferogram for the phase shifting sequence of the X-ray Talbot system in Fig. 4, the following separable form is proposed:

$$Z_n = a[1 + m_x \cos(\xi_x + \phi_{x,n})][1 + m_y \cos(\xi_y + \phi_{y,n})] \qquad (4)$$

where the first direction is labelled as the x-axis and the second direction as the y-axis of the system 400 formed using the X-ray apparatus 1399, $a$ is the overall absorption factor, $m_x$ is the modulation of the $x$ component, $m_y$ is the modulation of the y component, $\xi_x$ is the phase of the $x$ component, $\xi_y$ is the phase of the y component, $\phi_{x,n}$ is the imposed phase step in the $x$ component and $\phi_{y,n}$ is the imposed phase step in the y component.

The phase shifting technique provides temporal samples with a sequence of phase shifts of the carrier signal and captures the resulting fringe intensities $Z_n$, $n = 0 \dots M - 1$. A suitable choice of phase steps $\phi_{x,n}$ and $\phi_{y,n}$, $n = 0 \dots M - 1$, reveals sets of resulting fringe intensities that allow values of $a$, $m_x$, $m_y$, $\xi_x$ and $\xi_y$ to be determined.

The nature of the gratings used in an X-ray Talbot system 400 means that there will be some harmonics in the resulting image. However, the strength of the harmonics is usually very low due to the modulation translation function (MTF) of the optical system, including the effects of the sensor 440. Those harmonics are therefore ignored in Equation (4).

*Solving this system*

In order to solve Equation (4) for $a$, $m_x$, $m_y$, $\xi_x$ and $\xi_y$, a sequence of images must be captured. If the captured intensity is well modelled by a separable modulation in each of the $x$ and y directions as in Equation (4), it is theoretically possible to solve the system in Equation (4) using as few as 5 captures.

Depending on the phase step values $\phi_{x,n}$ and $\phi_{y,n}$, the present disclosure provides solutions using any number of captures that is greater than 4. If the phase steps are chosen carefully and achieved experimentally then, for some systems, closed form solutions exist. In other cases, closed form solutions are not known, but the equations can still be solved iteratively. The iterative solutions are, however, computationally much more expensive than the closed form solutions and require a good initial estimate for the solution to converge reliably. It is therefore desirable to use a closed form solution where possible. If the experimentally achieved phase steps differ from the required phase steps, these closed form solutions will produce errors in the recovered parameters. However, the achieved solution will generally be close to the true solution and will form a good starting solution for the iterative methods which can be used to refine the solution using the known phase steps. This means the true phase steps must be determined by some means. Because the closed form solution is close to the true solution, the iterative solution will require very few iterations. This approach therefore offers high speed image processing due to the closed form initial estimate and robustness to phase step errors from the general nature of the iterative solution given good estimates of the true phase steps.

*Adapting the model*

Because the gratings 410, 430 used in practical systems do not have square apertures and the modulation transfer function of the system 400 reduces the amplitude of higher spatial frequency components, the moiré interferogram produced by the X-ray Talbot system 400 cannot strictly be represented by a separable form like Equation (4). To account for these effects, the separable representation is expanded and adapted in form as follows:

$$Z_n = a\big(1 + m_x \cos(\xi_x + \phi_{x,n}) + m_y \cos(\xi_y + \phi_{y,n}) \\ + bm_x m_y \cos(\xi_x + \phi_{x,n}) \cos(\xi_y + \phi_{y,n})\big) \qquad (5)$$

where the modulation of the cross terms is modified by a factor $b$. This can correct for the effect of the non-square apertures and the MTF of the optical system (assuming the apertures are circular and the MTF is circularly symmetric). Real systems will of course not strictly adhere to these assumptions; however, the errors arising from making these assumptions for practical systems are quite small.

**Closed-form solution**

Fig. 1 depicts a method 100 offering a closed-form solution. The method 100 is preferably implemented as software executable on the computer system 1300 working in concert with the X-ray apparatus 1399. Step 110 captures the fringe pattern interferogram images which are provided to the computer 1301 for storage and processing. In some applications, the images may be captured by remote X-ray apparatus and communicated to the computer via the network 1320. The computer 1301 then executes an application in step 120 to estimate the five parameters: $a$, $m_x$, $m_y$, $\xi_x$ and $\xi_y$ from the moiré image data obtained from the captures of step 110 using a closed-form solution for each pixel in the images. The estimated parameters are then used in step 130 to solve for the $x$ and y derivatives of the optical path length $\psi(x, y)$ of the object in Fig. 4 to thereby reconstruct the phase image of the object 402 (the subject 1324) using the estimated parameters from step 120.

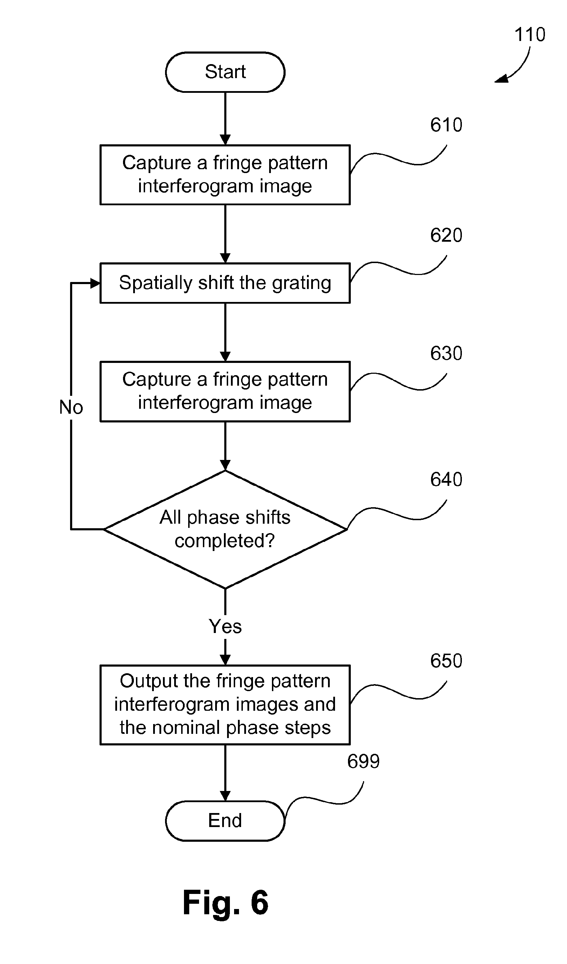

The details of the capture step 110 are further described in Fig. 6. Step 610 captures a first fringe pattern interferogram image. Step 620 spatially shifts at least one grating to obtain a desired phase step. Theoretically, the gratings G1(410) and G2(430) can be shifted in a 'translation' motion in the plane perpendicular to the X-ray direction. The relative position between G1 and G2 is maintained during the whole shifting process. i.e., the distance and angle between them (to generate moiré) stay the same. The two gratings (G1 and G2) are moved in several small and regular steps (5, 6, 7, or 8 steps according to the present disclosure) to generate enough samples of the sinusoidal function. The same effect can be achieved if the object is moved in the plane perpendicular to the X-rays in a similar fashion but opposite directions. However, moving the object is difficult due to its typically irregular shape. Also, practically moving two gratings at the same time by exactly the same amount is impractical. Preferably an extra grating G0, not illustrated in Fig. 4, but shown as the grating 450 in Fig. 13A, is arranged close to the X-ray source 404 and stepped in the direction perpendicular to the X-ray so that the object 402,1324 appears to move in a plane parallel to G1(410) and G2(430). The XTI system then captures another fringe pattern image in step 630.

Step 640 checks if all phase shifts have been done, there being a minimum of 4 actual shifts of the grating(s) to provide for the capture of 5 phase-shifted images. Note that an initial shift may be considered 0, thus simply requiring 5 shifts for 5 images. When all shifts are complete, all the captured fringe pattern images and the nominal phase steps $\phi_{x,n}$ and $\phi_{y,n}$ are passed in step 650 to step 120 for the estimation of the parameters.

In the image capture process 110 illustrated in Fig. 6, different numbers of captures can be applied. Based on the number of captures in step 110, step 120 uses different formulae to estimate the parameters using a closed form solution.

***Example 1: 9-phase-shift estimation with fixed ratio***

In this example, a total of 9 captures are needed. Step 640 checks if all 9 phase shifts are done giving 9 phase-shifted images. These 9 artificially introduced phase steps are chosen to be some specific values to cover at least one cycle of a sinusoidal signal. This example uses a fixed ratio between the $x$ direction phase steps $\phi_{x,n}$ and the y direction phase steps $\phi_{y,n}$: $\phi_{y,n} = 3\,\phi_{x,n}$. This ensures that the number of cycles covered in y direction is an integer as long as the number of cycles covered in x direction is an integer.

For this Example, Equation (4) is re-written by expanding the product and using trigonometric identities, to give:

$$z_n = a\big(1 + \alpha_x \cos(\phi_{x,n}) + \beta_x \sin(\phi_{x,n}) + \alpha_y \cos(\phi_{y,n}) + \beta_y \sin(\phi_{y,n}) \qquad (6)$$
$$+ \alpha_- \cos(\phi_n^-) + \beta_- \sin(\phi_n^-) + \alpha_+ \cos(\phi_n^+) + \beta_+ \sin(\phi_n^+)\big)$$

where the principle components are the strong components associated with the principle rulings of the grating. These principle components are associated with the terms

$$\alpha_x = m_x \cos(\xi_x),\ \beta_x = -m_x \sin(\xi_x)$$

$$(7)$$

$$\alpha_y = m_y \cos(\xi_y),\ \beta_y = -m_y \sin(\xi_y)$$

Expanding the product in (4) leads to cross components which are typically weaker than the principle components and at frequencies in the spatial frequency domain that are vector sums of the vector frequencies of the principle components. These cross components are associated with the terms

$$\alpha_- = \frac{1}{2}\alpha_x\alpha_y + \frac{1}{2}\beta_x\beta_y, \beta_- = \frac{1}{2}\alpha_x\beta_y - \frac{1}{2}\beta_x\alpha_y$$

$$\alpha_+ = \frac{1}{2}\alpha_x\alpha_y - \frac{1}{2}\beta_x\beta_y, \beta_+ = \frac{1}{2}\alpha_x\beta_y + \frac{1}{2}\beta_x\alpha_y \qquad (8)$$

$$\phi_n^- = \phi_{y,n} - \phi_{x,n}, \phi_n^+ = \phi_{y,n} + \phi_{x,n}$$

$$\qquad (9)$$

$$\xi^- = \xi_y - \xi_x, \xi^+ = \xi_y + \xi_x$$

In this example, the *x* direction phase steps $\phi_{x,n}$ are chosen as follows:

$$[0, 2\pi/9, 4\pi/9, 2\pi/3, 8\pi/9, 10\pi/9, 4\pi/3, 14\pi/9, 16\pi/9] \text{ (radians)}.$$

Correspondingly, the y direction phase steps $\phi_{y,n}$ are:

$$[0, 2\pi/3, 4\pi/3, 0, 2\pi/3, 4\pi/3, 0, 2\pi/3, 4\pi/3] \text{ (radians)}.$$

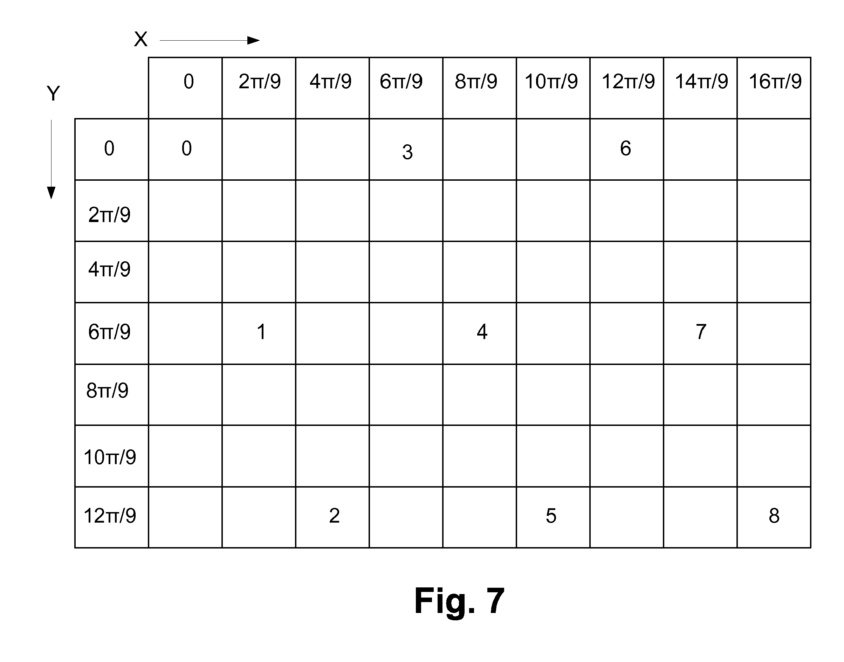

Fig. 7 lays out the phase steps $(\phi_{x,n}, \phi_{y,n})$, *n* = 0...*M* - 1, where M can have any value greater than or equal to 5, but in this example we use M = 9. Note that the above values for $(\phi_{x,n}, \phi_{y,n})$ are wrapped into $2\pi$, because of the periodicity of sinusoidal functions. Without the wrapping, this phase shifting pattern can be implemented in a straight line in the (x, y) plane. In practice, this implies simple mechanical design and reduced mechanical noise caused by hysteresis in the phase shifting process.

Referring back to Equation (6) and (9), when $\phi_{y,n} = 3\,\phi_{x,n}$, $\phi_n^- = 2\,\phi_{x,n}$ and $\phi_n^+ = 4\,\phi_{x,n}$. This ensures that both $\phi_n^-$ and $\phi_n^+$ cover integer numbers of cycles when the number of cycles covered in *x* direction is an integer. In other words, the phase steps $\phi_n^-$ for the $(\xi_y - \xi_x)$ component are:

$$[0, 4\pi/9, 8\pi/9, 12\pi/9, 16\pi/9, 2\pi/9, 6\pi/9, 10\pi/9, 14\pi/9],$$

and the phase steps $\phi_n^+$ for the $(\xi_y + \xi_x)$ component are:

$$[0, 8\pi/9, 16\pi/9, 6\pi/9, 14\pi/9, 4\pi/9, 12\pi/9, 2\pi/9, 10\pi/9].$$

Because the phase steps for all four components: $\xi_x$, $\xi_y$, $\xi_y$ - $\xi_x$ and $\xi_y$ + $\xi_x$ in Equation (6) cover integer numbers of cycles, i.e.,

$$\phi_{x,9} \; mod \; 2\pi = 0,$$

$$\phi_{y,9} \; mod \; 2\pi = 0,$$

$$\phi_9^- \; mod \; 2\pi = 0,$$

$$\phi_9^+ \; mod \; 2\pi = 0;$$

the basis

$$[1, \cos(\phi_{x,n}), \; \sin(\phi_{x,n}), \cos(\phi_{y,n}), \; \sin(\phi_{y,n}), \cos(\phi_n^-), \sin(\phi_n^-), \cos(\phi_n^+), \sin(\phi_n^+)],$$

$$n = 0, \ldots, M - 1$$

is an orthogonal basis.
For the linear system described in Equation (6), the captured value $z_n$ is a linear combination of 9 vectors that are orthogonal to each other. This linear system can be solved by projection of the captured values onto the orthogonal basis:

$$a = \sum_{n=1}^{9} z_n$$

$$\alpha_x = \frac{1}{a}\sum_{n=1}^{9} z_n \cos\left(\phi_{x,n}\right), \beta_x = \frac{1}{a}\sum_{n=1}^{9} z_n \sin\left(\phi_{x,n}\right) \tag{10}$$

$$\alpha_y = \frac{1}{a}\sum_{n=1}^{9} z_n \cos\left(\phi_{y,n}\right), \beta_y = \frac{1}{a}\sum_{n=1}^{9} z_n \sin\left(\phi_{y,n}\right)$$

$$\alpha_- = \frac{1}{a}\sum_{n=1}^{9} z_n \cos\left(\phi_n^-\right), \beta_- = \frac{1}{a}\sum_{n=1}^{9} z_n, \sin\left(\phi_n^-\right)$$

$$\alpha_+ = \frac{1}{a}\sum_{n=1}^{9} z_n \cos\left(\phi_n^+\right), \beta_+ = \frac{1}{a}\sum_{n=1}^{9} z_n, \sin\left(\phi_n^+\right)$$

From $\alpha_x$, $\beta_x$, $\alpha_y$, $\beta_y$ we can recover

$$m_x = \sqrt{\alpha_x^2 + \beta_x^2} \qquad (11)$$

$$m_y = \sqrt{\alpha_y^2 + \beta_y^2}$$

$$\xi_x = \mathrm{atan2}\left(-\beta_x, \alpha_x\right)$$

$$\xi_y = \mathrm{atan2}\left(-\beta_y, \alpha_y\right)$$

From $\alpha_-$, $\beta_-$, $\alpha_+$, $\beta_+$ we can recover

$$\frac{1}{2}m_x m_y = \sqrt{\alpha_-^2 + \beta_-^2} \qquad (12)$$

$$\frac{1}{2}m_x m_y = \sqrt{\alpha_+^2 + \beta_+^2}$$

$$\xi_- = \xi_y - \xi_x = \mathrm{atan2}\left(-\beta_-, \alpha_-\right)$$

$$\xi_+ = \xi_y + \xi_x = \mathrm{atan2}\left(-\beta_+, \alpha_+\right)$$

Equations (11) and (12) provide two sets of independent estimates for the parameters. This is useful in estimating the noise in the parameters. In addition, the difference and sum phase values may be helpful in unwrapping the $\xi_x$ and $\xi_y$ values as they will have different wrapping artefacts.

The x and y derivatives of the optical path length $\psi(x,y)$ of the object 402 in Fig. 4 can then be solved in step 130 using:

$$\xi_x = \frac{x}{p_x} + \frac{\partial \psi}{\partial x}$$

$$(13)$$

$$\xi_y = \frac{y}{p_y} + \frac{\partial \psi}{\partial y}$$

where $(x, y)$ is the pixel location and $p_x$ and $p_y$ are the known moiré carrier period in $x$ and y direction, respectively.

### *Example 2: 8-phase-shift estimation with fixed ratio*

In this example, a total of 8 captures are needed, and so step 640 checks if all 8 phase shifts are done. These 8 artificially introduced phase steps are chosen to be some specific values to cover at least one cycle of a sinusoidal signal. This example uses a fixed ratio between the *x* direction phase steps $\phi_{x,n}$ and the y direction phase steps, $\phi_{y,n}$: $\phi_{y,n} = 3\,\phi_{x,n}$. This fixed ratio ensures that the number of cycles covered in y direction is an integer as long as the number of cycles covered in x direction is an integer.

Referring back to Equation (6), since $\phi_{y,n} = 3\,\phi_{x,n}$, $\phi_n^- = 2\,\phi_{x,n}$ and $\phi_n^+ = 4\,\phi_{x,n}$, the phase steps are:

$$\phi_x: [0, \pi/4, \pi/2, 3\pi/4, \pi, 5\pi/4, 3\pi/2, 7\pi/4]$$

$$\phi_y: [0, 3\pi/4, 3\pi/2, \pi/4, \pi, 7\pi/4, \pi/2, 5\pi/4]$$

$$\phi^-: [0, \pi/2, \pi, 3\pi/2, 0, \pi/2, \pi, 3\pi/2]$$

$$\phi^+: [0, \pi, 0, \pi, 0, \pi, 0, \pi]$$

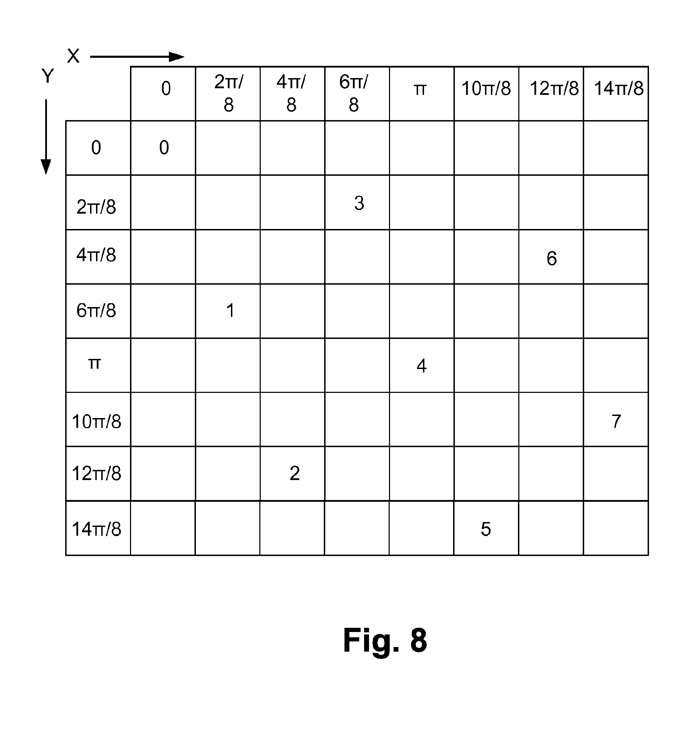

Fig. 8 lays out the phase steps $(\phi_{x,n}, \phi_{y,n})$, $n = 0 \ldots M - 1$, where M = 8. Note that the above values for $(\phi_{x,n}, \phi_{y,n})$ are wrapped around $2\pi$, given the periodicity of sinusoidal functions. Without the wrapping, this phase shifting pattern can be implemented in a straight line in the (x, y) plane. In practice, this implies simple mechanical design and reduced mechanical noise caused by hysteresis in the phase shifting process.

The above phase steps are then used in Equation (6), to obtain:

$$z_0 = a\left(1 + \alpha_x + \alpha_y + \alpha_- + \alpha_+\right)$$

$$z_1 = a\left(1 + \frac{1}{\sqrt{2}}\alpha_x + \frac{1}{\sqrt{2}}\beta_x - \frac{1}{\sqrt{2}}\alpha_y + \frac{1}{\sqrt{2}}\beta_y + \beta_- - \alpha_+\right)$$

$$z_2 = a\left(1 + \beta_x - \beta_y - \alpha_- + \alpha_+\right)$$

$$z_3 = a\left(1 - \frac{1}{\sqrt{2}}\alpha_x + \frac{1}{\sqrt{2}}\beta_x + \frac{1}{\sqrt{2}}\alpha_y + \frac{1}{\sqrt{2}}\beta_y - \beta_- - \alpha_+\right)$$

$$(14)$$

$$z_4 = a\left(1 - \alpha_x - \alpha_y + \alpha_- + \alpha_+\right)$$

$$z_5 = a\left(1 - \frac{1}{\sqrt{2}}\alpha_x - \frac{1}{\sqrt{2}}\beta_x + \frac{1}{\sqrt{2}}\alpha_y - \frac{1}{\sqrt{2}}\beta_y + \beta_- - \alpha_+\right)$$

$$z_6 = a\left(1 - \beta_x + \beta_y - \alpha_- + \alpha_+\right)$$

$$z_7 = a\left(1 + \frac{1}{\sqrt{2}}\alpha_x - \frac{1}{\sqrt{2}}\beta_x - \frac{1}{\sqrt{2}}\alpha_y - \frac{1}{\sqrt{2}}\beta_y - \beta_- - \alpha_+\right)$$

Solving the resulting system of equations (14) gives:

$$a = \frac{1}{4}\left(z_0 + z_4 + z_2 + z_6 + z_1 + z_5 + z_3 + z_7\right)$$

$$\alpha_x = \frac{2(z_0 - z_4) + \sqrt{2}(z_1 - z_5 - z_3 + z_7)}{2a}$$

$$(15)$$

$$\beta_x = \frac{2(z_2 - z_6) + \sqrt{2}(z_1 - z_5 + z_3 - z_7)}{2a}$$

$$\alpha_y = \frac{2(z_0 - z_4) - \sqrt{2}(z_1 - z_5 - z_3 + z_7)}{2a}$$

$$\beta_y = \frac{-2(z_2 - z_6) + \sqrt{2}(z_1 - z_5 + z_3 - z_7)}{2a}$$

$$\alpha_- = \frac{(z_0 + z_4) - (z_2 + z_6)}{4a}$$

$$\beta_- = \frac{(z_1 - z_3) + (z_5 - z_7)}{4a}$$

$$\alpha_+ = -\frac{(z_1 + z_5) + (z_3 + z_7)}{4a}$$

Similar to the first example, it is therefore possible to determine the first set of estimates for $m_x$, $m_y$, $\xi_x$, $\xi_y$ using Equation (11) and the second set of estimates using Equation (12). It is worth noting that $\beta_+$ is not present in system (14) because the phase steps for $\phi^+$ are either 0 or $\pi$, which makes $\sin(\phi_n^+) = 0$ for all n's. However, this has very limited impact on the final solution since system (14) is a redundant system with 8 captures.

***Example* 3: *8-phase-shift estimation with checkerboard pattern***

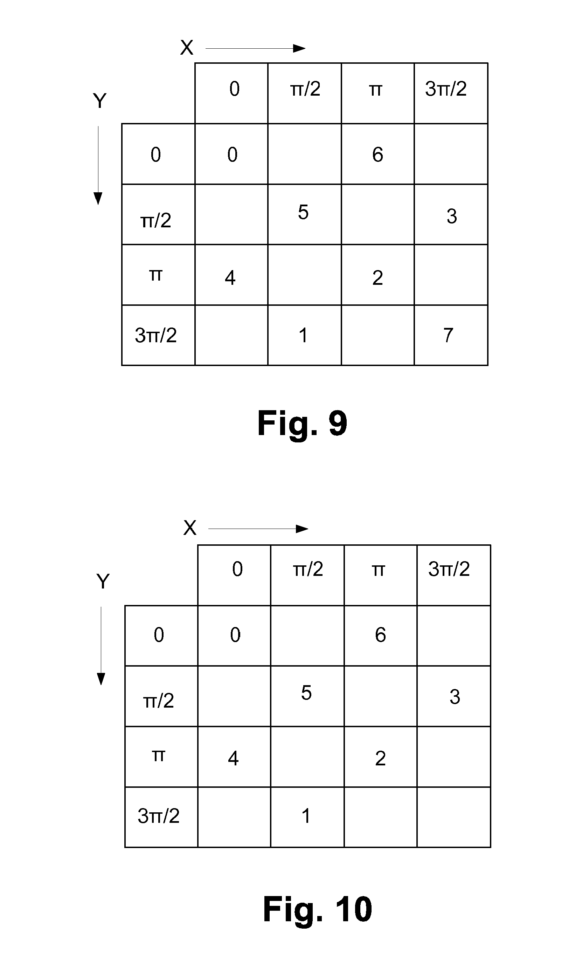

In this example, a total of 8 captures are needed and again step 640 checks if all 8 phase shifts are done. The phase steps applied in this example form a checkerboard pattern in the x-y plane. Fig. 9 lays out the phase steps ($\phi_{x,n}$, $\phi_{y,n}$), n = 0...M - 1, where M = 8. The phase steps are:

$$\phi_x: [0, \pi/2, \pi, 3\pi/2, 0, \pi/2, \pi, 3\pi/2]$$

$$\phi_y: [0, 3\pi/2, \pi, \pi/2, \pi, \pi/2, 0, 3\pi/2]$$

Note that the above values for ($\phi_{x,n}$, $\phi_{y,n}$) are wrapped into $2\pi$, because of the periodicity of sinusoidal functions. Inserting the above phase steps into Equation (6), gives:

$$z_0 = a(1 + m_x \cos(\xi_x))(1 + m_y \cos(\xi_y))$$

$$z_1 = a(1 - m_x \sin(\xi_x))(1 + m_y \sin(\xi_y))$$

$$z_2 = a(1 - m_x \cos(\xi_x))(1 - m_y \cos(\xi_y))$$

$$z_3 = a(1 + m_x \sin(\xi_x))(1 - m_y \sin(\xi_y))$$

$$z_4 = a(1 + m_x \cos(\xi_x))(1 - m_y \cos(\xi_y))$$

$$z_5 = a(1 - m_x \sin(\xi_x))(1 - m_y \sin(\xi_y))$$

$$z_6 = a(1 - m_x \cos(\xi_x))(1 + m_y \cos(\xi_y))$$

$$z_7 = a(1 + m_x \sin(\xi_x))(1 + m_y \sin(\xi_y))$$

$$(16)$$

Making the following substitutions as in Equation (7),

$$\alpha_x = m_x \cos(\xi_x), \ \beta_x = -m_x \sin(\xi_x)$$

$$\alpha_y = m_y \cos(\xi_y), \ \beta_y = -m_y \sin(\xi_y)$$

the equations in (16) become:

$$z_0 = a(1 + \alpha_x)(1 + \alpha_y)$$

$$z_1 = a(1 + \beta_x)(1 - \beta_y)$$

$$z_2 = a(1 - \alpha_x)(1 - \alpha_y)$$

$$z_3 = a(1 - \beta_x)(1 + \beta_y)$$

$$z_4 = a(1 + \alpha_x)(1 - \alpha_y) \tag{17}$$

$$z_5 = a(1 + \beta_x)(1 + \beta_y)$$

$$z_6 = a(1 - \alpha_x)(1 + \alpha_y)$$

$$z_7 = a(1 - \beta_x)(1 - \beta_y)$$

The above system in (17) is an over-determined system. To characterise the noise, two independent sets of estimated parameters $a$, $m_x$, $m_y$, $\xi_x$, $\xi_y$ are obtained.

$$a' = (z_0 + z_2 + z_4 + z_6)/4$$

$$a'' = (z_1 + z_3 + z_5 + z_7)/4$$

$$\alpha_x' = m_x \cos(\xi_x) = 1 - \frac{z_2 + z_6}{2a}$$

$$\alpha_x'' = m_x \cos(\xi_x) = \frac{z_0 + z_4}{2a} - 1 \tag{18}$$

$$\beta_x' = -m_x \sin(\xi_x) = \frac{z_1 + z_5}{2a} - 1$$

$$\beta_x'' = -m_x \sin(\xi_x) = 1 - \frac{z_3 + z_7}{2a}$$

$$\alpha_y' = m_y \cos(\xi_y) = 1 - \frac{z_2 + z_4}{2a}$$

$$\alpha_y'' = m_y \cos(\xi_y) = \frac{z_0 + z_6}{2a} - 1$$

$$\beta_y' = -m_y \sin(\xi_y) = \frac{z_3 + z_5}{2a} - 1$$

$$\beta_y'' = -m_y \sin(\xi_y) = 1 - \frac{z_1 + z_7}{2a}$$

Averaging these estimates to reduce the effects of random error gives:

$$a = \frac{a' + a''}{2}, \alpha_x = \frac{\alpha_x' + \alpha_x''}{2}, \beta_x = \frac{\beta_x' + \beta_x''}{2}, \alpha_y = \frac{\alpha_y' + \alpha_y''}{2}, \beta_y = \frac{\beta_y' + \beta_y''}{2} \tag{19}$$

Similar to the first example, the values of $m_x$, my, $\xi_x$, $\xi_y$ can be deduced using Equation (11).

### Example 4: 7-phase-shift estimation with checkerboard pattern

In this example, a total of 7 captures are needed. Step 640 checks if all 7 phase shifts are done. The phase steps applied in this example form a checkerboard pattern in the x-y plane. Fig. 10 lays out the phase steps $(\phi_{x,n}, \phi_{y,n})$, $n$ = 0...$M$ - 1, where M = 7. The phase steps are:

$$\phi_x: [0, \pi/2, \pi, 3\pi/2, 0, \pi/2, \pi]$$

$$\phi_y: [0, 3\pi/2, \pi, \pi/2, \pi, \pi/2, 0]$$

Note that the above values for $(\phi_{x,n}, \phi_{y,n})$ are wrapped around $2\pi$, given the periodicity of sinusoidal functions. Inserting the above phase steps into Equation (6), gives:

$$z_0 = a(1 + m_x \cos(\xi_x))(1 + m_y \cos(\xi_y))$$

$$z_1 = a(1 - m_x \sin(\xi_x))(1 + m_y \sin(\xi_y))$$

$$z_2 = a(1 - m_x \cos(\xi_x))(1 - m_y \cos(\xi_y))$$

$$z_3 = a(1 + m_x \sin(\xi_x))(1 - m_y \sin(\xi_y)) \qquad (20)$$

$$z_4 = a(1 + m_x \cos(\xi_x))(1 - m_y \cos(\xi_y))$$

$$z_5 = a(1 - m_x \sin(\xi_x))(1 - m_y \sin(\xi_y))$$

$$z_6 = a(1 - m_x \cos(\xi_x))(1 + m_y \cos(\xi_y))$$

Making the following substitutions, as in Equation (7),

$$\alpha_x = m_x \cos(\xi_x), \ \beta_x = -m_x \sin(\xi_x)$$

$$\alpha_y = m_y \cos(\xi_y), \ \beta_y = -m_y \sin(\xi_y)$$

the equations in (20) become:

$$z_0 = a(1 + \alpha_x)(1 + \alpha_y)$$

$$z_1 = a(1 + \beta_x)(1 - \beta_y)$$

$$z_2 = a(1 - \alpha_x)(1 - \alpha_y)$$

$$z_3 = a(1 - \beta_x)(1 + \beta_y) \qquad (21)$$

$$z_4 = a(1 + \alpha_x)(1 - \alpha_y)$$

$$z_5 = a(1 + \beta_x)(1 + \beta_y)$$

$$z_6 = a(1 - \alpha_x)(1 + \alpha_y) \ .$$

Solving the above system in (21) gives:

$$a = (z_0 + z_2 + z_4 + z_6)/4$$

$$\alpha_x = \frac{(z_0 + z_4) - (z_2 + z_6)}{4a}$$

$$\beta_x = \frac{(z_1 + z_5)}{2a} - 1 \qquad (22)$$

$$\alpha_y = \frac{(z_0 + z_6) - (z_2 + z_4)}{4a}$$

$$\beta_y = \frac{(z_3 + z_5)}{2a} - 1$$

Similar to the first example, the values of $m_x$, $m_y$, $\xi_x$, $\xi_y$ can be deduced using Equation (11).

*Example 5: 6-phase-shift estimation with checkerboard pattern*

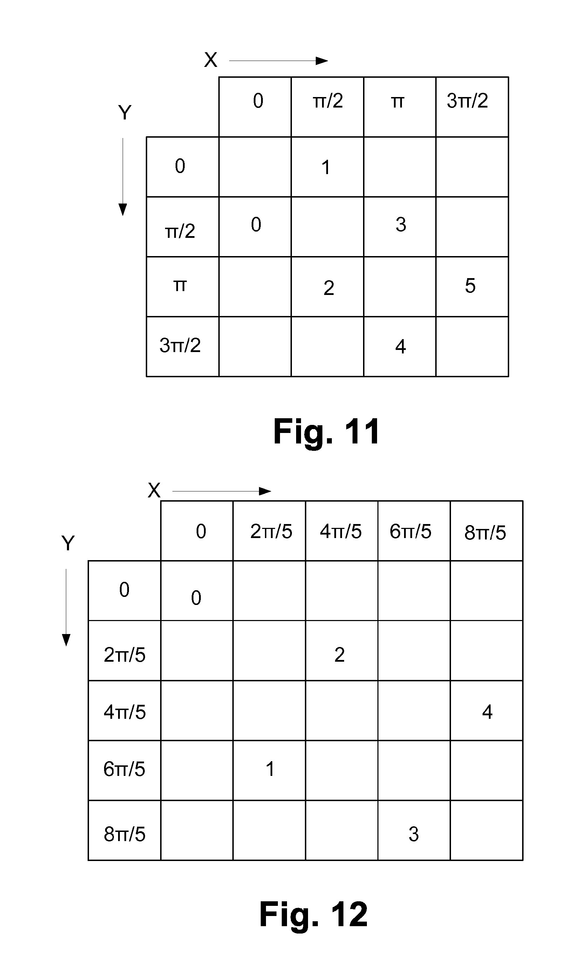

In this example, a total of 6 captures are needed. Step 640 checks if all 6 phase shifts are done. The phase steps applied in this example form a checkerboard pattern in the x-y plane. Fig. 11 lays out the phase steps ($\phi_{x,n}, \phi_{y,n}$), $n = 0...M - 1$, where M = 6. The phase steps are:

$$\phi_x: [0, \pi/2, \pi/2, \pi, \pi, 3\pi/2]$$

$$\phi_y: [\pi/2, 0, \pi, \pi/2, 3\pi/2, \pi]$$

Note that the above values for $(\phi_{x,n}, \phi_{y,n})$ are wrapped into $2\pi$, because of the periodicity of sinusoidal functions. Inserting the above phase steps into Equation (6) and make the following substitutions as in Equation (7),

$$\alpha_x = m_x \cos(\xi_x), \ \beta_x = -m_x \sin(\xi_x)$$

$$\alpha_y = m_y \cos(\xi_y), \ \beta_y = -m_y \sin(\xi_y)$$

the system to solve is:

$$z_0 = a(1 + \alpha_x)(1 + \beta_y)$$

$$z_1 = a(1 + \beta_x)(1 + \alpha_y)$$

$$z_2 = a(1 + \beta_x)(1 - \alpha_y)$$

$$z_3 = a(1 - \alpha_x)(1 + \beta_y)$$

$$z_4 = a(1 - \alpha_x)(1 - \beta_y)$$

$$z_5 = a(1 - \beta_x)(1 - \alpha_y)$$

$$(23)$$

Solving the above system in (21) gives:

$$a' = \frac{(z_0 + z_3)(z_3 + z_4)}{4z_3}$$

$$a'' = \frac{(z_1 + z_2)(z_2 + z_5)}{4z_2}$$

$$a = \frac{a' + a''}{2}$$

$$\alpha_x = \frac{z_0 - z_3}{z_0 + z_3}$$

$$\alpha_y = \frac{z_1 - z_2}{z_1 + z_2}$$

$$\beta_x = \frac{z_2 - z_5}{z_2 + z_5}$$
(24)

$$\beta_y = \frac{z_3 - z_4}{z_3 + z_4}$$

Similar to the first example, the values of $m_x$, $m_y$, $\xi_x$, $\xi_y$ can be deduced using Equation (11).

**Non-linear solution with separable modulation**

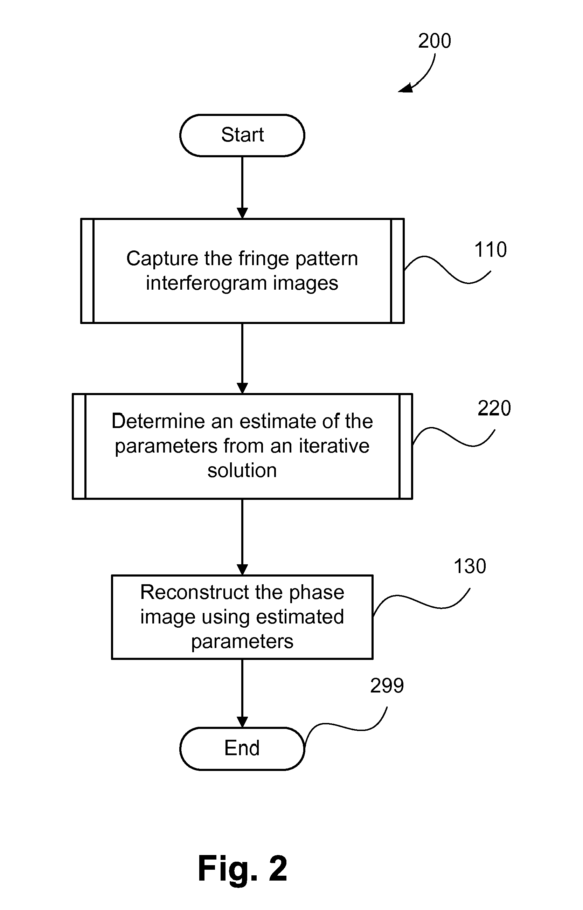

The parameters in Equation (4) can also be estimated using an iterative method 200 shown in Fig. 2 which may also be implemented by the computer 1301. Referring to Fig. 2, the method 200 commences with step 110 by which fringe pattern interferogram images are captured in the same way described in Fig. 1. Step 220 then determines an estimate of the parameters in Equation (4) from an iterative solution.

Step 130 solves for the x and y derivatives of the optical path length $\psi(x, y)$ of the object in Fig. 4, and the method 200 concludes at step 299. The reconstruction may be performed by treating the recovered data (recovered independently at each pixel) as images. The differential path length images are those that are commonly used as the features of the object are more visible once the carrier phase is removed.

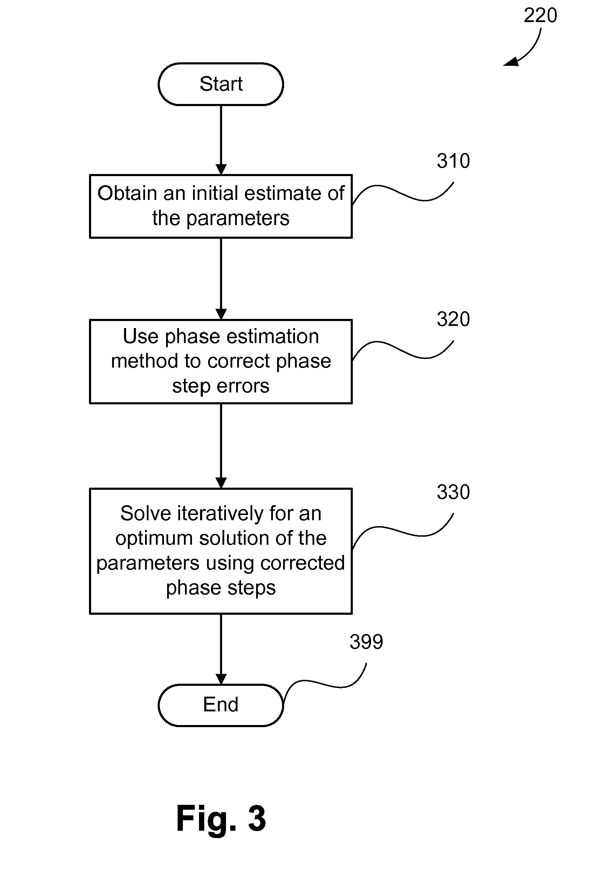

Details of step 220 are explained in Fig. 3. In Fig. 3, step 310 obtains an initial estimate of the phase and modulation parameters, $a$, $m_x$, $m_y$, $\xi_x$ and $\xi_y$. The initial estimate of the five parameters can be the same as the first example, or it can be just random values, since the method to be implemented in this example is iterative. The parameter estimates for each pixel can be revised by generating an simulated (i.e. iterated) set of fringe intensities for that pixel and comparing the simulated set of fringe intensities with the set of captured fringe intensities at that pixel. Step 320 then uses a phase estimation method to correct phase step errors. The phase step errors arise from the mechanical shifting or stepping of the crossed-diffraction grating formed by the gratings 410 and 430 during the capture of the respective moiré images. Step 330 solves iteratively for an optimum solution of the parameters using the corrected phase steps from step 320 and the initial estimate from 310.

Referring back to Equation (6), (7) and (8), we have

$$z_n = a[1 + \alpha_x \cos(\phi_{x,n}) + \beta_x \sin(\phi_{x,n}) + \alpha_y \cos(\phi_{y,n}) + \beta_y \sin(\phi_{y,n})$$

$$+ \frac{1}{2}(\alpha_x \alpha_y + \beta_x \beta_y)\cos(\phi_{y,n} - \phi_{x,n}) + \frac{1}{2}(\alpha_x \beta_y - \beta_x \alpha_y)\sin(\phi_{y,n} - \phi_{x,n})$$

$$+ \frac{1}{2}(\alpha_x \alpha_y - \beta_x \beta_y)\cos(\phi_{y,n} + \phi_{x,n}) + \frac{1}{2}(\alpha_x \beta_y + \beta_x \alpha_y)\sin(\phi_{y,n} + \phi_{x,n})].$$

Expanding the following terms as

$$(\alpha_x\alpha_y + \beta_x\beta_y)\cos(\phi_{y,n} - \phi_{x,n}) = \alpha_x\alpha_y\cos(\phi_{y,n})\cos(\phi_{x,n}) + \alpha_x\alpha_y\sin(\phi_{y,n})\sin(\phi_{x,n})$$
$$+\beta_x\beta_y\cos(\phi_{y,n})\cos(\phi_{x,n}) + \beta_x\beta_y\sin(\phi_{y,n})\sin(\phi_{x,n})$$

$$(\alpha_x\beta_y - \beta_x\alpha_y)\sin(\phi_{y,n} - \phi_{x,n}) = \alpha_x\beta_y\sin(\phi_{y,n})\cos(\phi_{x,n}) - \alpha_x\beta_y\cos(\phi_{y,n})\sin(\phi_{x,n})$$
$$-\beta_x\alpha_y\sin(\phi_{y,n})\cos(\phi_{x,n}) + \beta_x\alpha_y\cos(\phi_{y,n})\sin(\phi_{x,n})$$

$$(\alpha_x\alpha_y - \beta_x\beta_y)\cos(\phi_{y,n} + \phi_{x,n}) = \alpha_x\alpha_y\cos(\phi_{y,n})\cos(\phi_{x,n}) - \alpha_x\alpha_y\sin(\phi_{y,n})\sin(\phi_{x,n})$$
$$-\beta_x\beta_y\cos(\phi_{y,n})\cos(\phi_{x,n}) + \beta_x\beta_y\sin(\phi_{y,n})\sin(\phi_{x,n})$$

$$(\alpha_x\beta_y + \beta_x\alpha_y)\sin(\phi_{y,n} + \phi_{x,n}) = \alpha_x\beta_y\sin(\phi_{y,n})\cos(\phi_{x,n}) + \alpha_x\beta_y\cos(\phi_{y,n})\sin(\phi_{x,n})$$
$$+\beta_x\alpha_y\sin(\phi_{y,n})\cos(\phi_{x,n}) + \beta_x\alpha_y\cos(\phi_{y,n})\sin(\phi_{x,n})$$

Finally

$$z_n = a(1 + \alpha_x\cos(\phi_{x,n}) + \beta_x\sin(\phi_{x,n}) + \alpha_y\cos(\phi_{y,n})$$
$$+ \beta_y\sin(\phi_{y,n}) + \alpha_x\alpha_y\cos(\phi_{y,n})\cos(\phi_{x,n})$$
$$+ \beta_x\beta_y\sin(\phi_{y,n})\sin(\phi_{x,n}) + \alpha_x\beta_y\sin(\phi_{y,n})\cos(\phi_{x,n})$$
$$+ \beta_x\alpha_y\cos(\phi_{y,n})\sin(\phi_{x,n}))$$

$$(25)$$

where $n = 0, ..., M - 1$.
Depending on the number of phase steps used in step 110 of the method 200 of Fig. 2, the value of $M$ can be any integer greater than 4.

***Example* 7: *Non-linear demodulation with M phase shifts***

In this example, a total of 9 images are captured in step 110. Equation (25) can be written more compactly as

$$z_n = Z_n(\boldsymbol{C})$$

where the vector $C$ represents the parameters to be estimated:

$$C = [a \quad \alpha_x \quad \alpha_y \quad \beta_x \quad \beta_y]$$

It is convenient to define a residual function

$$f(C) = \begin{bmatrix} f_0(C) \\ \vdots \\ f_n(C) \\ \vdots \\ f_{M-1}(C) \end{bmatrix} = \begin{bmatrix} Z_0(C) - z_0 \\ \vdots \\ Z_n(C) - z_n \\ \vdots \\ Z_{M-1}(C) - z_{M-1} \end{bmatrix}. \qquad (26)$$

In Equation (26), $Z_n(C)$ denotes the modeled pixel intensity described by Equation (25) with imposed phase step values ($\phi_{x,n}$, $\phi_{y,n}$), n = 0, ..., $M$ - 1 ; and $z_n$ represents the captured pixel intensity as an output of step 110. In order to minimize $f(C)$, Gauss-Newton algorithm is applied to minimize the mean squared residual error:

$$S(C) = f(C)^T f(C).$$

This gives the iterative solution as follows:

$$C_{k+1} = C_k - (J^T J)^{-1} J^T f(C) \qquad (27)$$

where $J$ is the M $\times$ 5 Jacobian matrix of $f(C)$, i.e.,

$$J = [J_i], \quad J_i = \frac{\partial f_n}{\partial c_i}, \text{ where } i = 1, \dots, 5$$

The columns of $J$ are:

$$J_1 = \frac{\partial f_n}{\partial a} = 1 + \alpha_x \cos(\phi_{x,n}) + \beta_x \sin(\phi_{x,n}) + \alpha_y \cos(\phi_{y,n}) + \beta_y \sin(\phi_{y,n})$$
$$+ \alpha_x \alpha_y \cos(\phi_{y,n}) \cos(\phi_{x,n}) + \beta_x \beta_y \sin(\phi_{y,n}) \sin(\phi_{x,n})$$
$$+ \alpha_x \beta_y \sin(\phi_{y,n}) \cos(\phi_{x,n}) + \beta_x \alpha_y \cos(\phi_{y,n}) \sin(\phi_{x,n})$$

$$J_2 = \frac{\partial f_n}{\partial \alpha_x} = a\big(cos(\phi_{x,n}) + \alpha_y \cos(\phi_{y,n}) cos(\phi_{x,n}) + \beta_y sin(\phi_{y,n}) cos(\phi_{x,n})\big)$$

$$(28)$$

$$J_3 = \frac{\partial f_n}{\partial \alpha_y} = a\big(\cos(\phi_{y,n}) + \alpha_x \cos(\phi_{y,n}) \cos(\phi_{x,n}) + \beta_x \cos(\phi_{y,n}) \sin(\phi_{x,n})\big)$$

$$J_4 = \frac{\partial f_n}{\partial \beta_x} = a\big(\sin(\phi_{x,n}) + \alpha_y \cos(\phi_{y,n}) \sin(\phi_{x,n}) + \beta_y \sin(\phi_{y,n}) \sin(\phi_{x,n})\big)$$

$$J_5 = \frac{\partial f_n}{\partial \beta_y} = a\big(\sin(\phi_{y,n}) + \alpha_x \sin(\phi_{y,n}) \cos(\phi_{x,n}) + \beta_x \sin(\phi_{y,n}) \sin(\phi_{x,n})\big) \ .$$

Starting with some initial estimate $C_O$, the Gauss-Newton method updates the estimate of the parameter vector at each step until the estimate converges ($f(C_k) < \epsilon$, where $\epsilon$ is some small number).

The iterative Gauss-Newton algorithm described above can be computationally expensive or may not converge in certain circumstances. Therefore, it is important to choose a good initial estimate of C. This initial estimate can be chosen heuristically. Unlike the closed-form solutions, as long as the Jacobian matrix $J$ in Equation (28) is non-singular, no predetermined phase shift pattern is required.

Meanwhile, in the case of 9 captures, a closed form solution exists, as explained in Example 1. The initial estimates in the Gauss-Newton algorithm can then be obtained through the closed-form solution in Example 1. Generally, the initial estimates from the closed-form solution are much more accurate than the heuristically chosen initial values. In this case, the phase steps in Equation (28) will have the pattern in Example 1.

Furthermore, the introduced phase steps ($\phi_{x,n}$, $\phi_{y,n}$) in Equation (28) are corrected in step 320 using a phase estimation method to reduce the error between the nominal phase steps and the actual phase steps in the experiments.

In step 320, any phase estimation method can be used to correct the phase steps ($\phi_{x,n}$, $\phi_{y,n}$). For example, the carrier frequency of each individual carrier in a group of phase-shifted images can be determined by measuring the position of the peaks in the Fourier transform, and the relative phases of each of the phase-shift images can be determined by measuring the complex phase of these peaks.

### Example 8: Non-linear demodulation with 8 phase shifts

In this example, a total of 8 images are captured in 110. Similar to Example 7, Gauss-Newton algorithm is used to obtain an optimum estimate in the minimum mean square sense. This initial estimate $C_0$ for the iterative algorithm can be chosen heuristically. Unlike the closed-form solutions, as long as the Jacobian matrix $J$ in Equation (28) is non-singular, no specific phase shift pattern is required.

In the case of 8 captures, a closed form solution exists, as explained in Examples 2 and 3. The initial estimates $C_0$ can then be obtained through the closed-form solution in Examples 2 or 3. Generally, the initial estimates from the closed-form solution are much more accurate than the heuristically chosen initial values. In this case, the phase steps in Equation (28) will have the pattern in Embodiment 2 or 3.

Furthermore, the introduced phase steps ($\phi_{x,n}$, $\phi_{y,n}$) in Equation (28) are corrected in step 320 using a phase estimation method to reduce the error between the nominal phase steps and the actual phase steps in the experiments.

*Example 9: Non-linear demodulation with 7 phase shifts*

In this example, a total of 7 images are captured in step 110. Similar to Example 7, Gauss-Newton algorithm is used to obtain an optimum estimate in the minimum mean square sense. This initial estimate $C_0$ for the iterative algorithm can be chosen heuristically. Unlike the closed-form solutions, as long as the Jacobian matrix $J$ in Equation (28) is non-singular, no specific phase shift pattern is required.

In the case of 7 captures, a closed form solution exists, as explained in Example 4. The initial estimates $C_0$ can then be obtained through the closed-form solution in Example 4. Generally, the initial estimates from the closed-form solution are much more accurate than the heuristically chosen initial values. In this case, the phase steps in Equation (28) will have the pattern in Example 4.

Furthermore, the introduced phase steps $(\phi_{x,n}, \phi_{y,n})$ in Equation (28) are corrected in step 320 using a phase estimation method to reduce the error between the nominal phase steps and the actual phase steps in the experiments.

*Example 10: Non-linear demodulation with 6 phase shifts*

In this example, a total of 6 images are captured in 110. Similar to Example 7, Gauss-Newton algorithm is used to obtain an optimum estimate in the minimum mean square sense. This initial estimate $C_0$ for the iterative algorithm can be chosen heuristically. Unlike the closed-form solutions, as long as the Jacobian matrix $J$ in Equation (28) is non-singular, no specific phase shift pattern is required.

In the case of 6 captures, a closed form solution exists, as explained in Example 5. The initial estimates $C_0$ can then be obtained through the closed-form solution in Example 5. Generally, the initial estimates from the closed-form solution are much more accurate than the heuristically chosen initial values. In this case, the phase steps in Equation (28) will have the pattern in Example 5.

Furthermore, the introduced phase steps $(\phi_{x,n}, \phi_{y,n})$ in Equation (28) are corrected in step 320 using a phase estimation method to reduce the error between the nominal phase steps and the actual phase steps in the experiments.

*Example 11: Non-linear demodulation with 5 phase shifts*

In this example, a total of 5 captures are needed. Step 640 checks if all 5 phase shifts are done. These 5 artificially introduced phase shifts are chosen to be some specific values to cover at least one cycle of a sinusoidal signal. This example uses a fixed ratio between the $x$ direction phase steps $\phi_{x,n}$ and the y direction phase steps $\phi_{y,n}$: $\phi_{y,n} = 3 \phi_{x,n}$. This ensures that the number of cycles covered in y direction is an integer as long as the number of cycles covered in x direction is an integer.

Fig. 12 lays out the phase steps $(\phi_{x,n}, \phi_{y,n})$, $n = 0...M - 1$, where M = 5. The phase steps are:

$$\phi_x: [0, 2\pi/5, 4\pi/5, 6\pi/5, 8\pi/5]$$

$$\phi_y: [0, 6\pi/5, 2\pi/5, 8\pi/5, 4\pi/5]$$

In other words, the phase steps can be described as:

$$\phi_{x,n} = \frac{2n\pi}{5}$$

$$\phi_{y,n} = \frac{6n\pi}{5}$$

$$\phi_n^- = \frac{4n\pi}{5}$$

$$(29)$$

$$\phi_n^+ = \frac{8n\pi}{5}.$$

where $n = 0, ..., 4$. Note that the above values for $(\phi_{x,n}, \phi_{y,n})$ are wrapped around $2\pi$, given the periodicity of sinusoidal functions. Without the wrapping, this phase shifting pattern can be implemented in a straight line in the (x, y) plane. In practice, this implies simple mechanical design and reduced mechanical noise caused by hysteresis in the phase shifting process.

Replacing $\sin(\phi_n^-)$, $\sin(\phi_n^+)$, $\cos(\phi_n^-)$ and $\cos(\phi_n^+)$ in Equation (6) using Equation (29),

$$\sin(\phi_n^-) = \sin(\phi_n^- - 2n\pi) = \sin\left(-\frac{6n\pi}{5}\right) = -\sin(\phi_{y,n})$$

$$\sin(\phi_n^+) = \sin(\phi_n^+ - 2n\pi) = \sin\left(-\frac{2n\pi}{5}\right) = -\sin(\phi_{x,n})$$

$$\cos(\phi_n^-) = \cos(\phi_n^- - 2n\pi) = \cos\left(-\frac{6n\pi}{5}\right) = \cos(\phi_{y,n})$$

$$\cos(\phi_n^+) = \cos(\phi_n^+ - 2n\pi) = \cos\left(-\frac{2n\pi}{5}\right) = \cos(\phi_{x,n})$$

we have

$$z_n = a(1 + (\alpha_x + \alpha_+)\cos(\phi_{x,n}) + (\beta_x - \beta_+)\sin(\phi_{x,n}) + (\alpha_y + \alpha_-)\cos(\phi_{y,n}) + (\beta_y - \beta_-)\sin(\phi_{y,n})), \quad n = 0, ..., 4.$$

$$(30)$$

Solving the above system in (30) returns the values of

$$[a \,, \ a \left(\alpha_x + \alpha_+\right) \,, \ a(\beta_x - \beta_+) \,, \ a(\alpha_y + \alpha_-) \,, \ a(\beta_y - \beta_-)]$$

Using the definition in Equation (7) and (8), the values of [$a$, $m_x$, $m_y$, $\xi_x$, and $\xi_y$] can be recovered by solving a non-linear system. This non-linear system can be solved with a variety of approaches such as the Gauss Newton algorithm. The initial estimate for the Gauss Newton algorithm can be chosen heuristically.

**Non-linear solution with non-separable modulation**

The previous examples are based on the modulation model described in Equation (4), where the modulation in $x$ and y direction are separable. With different configurations of the crossed gratings in Fig. 5, it is sometimes more accurate to use a different modulation model for the fringe pattern interferogram images.
For example, different grating designs will change the strength of the cross term

$$m_x\, m_y \cos\left(\xi_x + \phi_{x,n}\right) \cos\left(\xi_y + \phi_{y,n}\right) \tag{31}$$

if the product in Equation (4) is expanded.

*Example 12: Non-linear demodulation with varying cross term*

Assuming the amplitude of the cross term in (31) is *ab*, as described in Equation (5), then

$$z_n =$$
$$a[1 + \ m_x \cos\left(\xi_x + \phi_{x,n}\right) + \ m_y \cos\left(\xi_y + \phi_{y,n}\right) + b\, m_x\, m_y \cos\left(\xi_x + \phi_{x,n}\right) \cos\left(\xi_y + \phi_{y,n}\right)]$$

where b varies from 0 to 1. The equation may be re-written as follows:

$$z_n = a(1 + \alpha_x \cos\left(\phi_{x,n}\right) \ + \beta_x \sin\left(\phi_{x,n}\right) \ + \alpha_y \cos\left(\phi_{y,n}\right) + \beta_y \sin\left(\phi_{y,n}\right)$$
$$+ b\, \alpha_x \alpha_y \cos\left(\phi_{y,n}\right) \cos\left(\phi_{x,n}\right) + b\, \beta_x \beta_y \sin\left(\phi_{y,n}\right) \sin\left(\phi_{x,n}\right) \tag{32}$$
$$+ b\, \alpha_x \beta_y \sin\left(\phi_{y,n}\right) \cos\left(\phi_{x,n}\right) + b\, \beta_x \alpha_y \cos\left(\phi_{y,n}\right) \sin\left(\phi_{x,n}\right)) \ .$$

Similar to Example 7, Gauss-Newton algorithm is used to obtain an optimum estimate in the minimum mean square sense. The initial estimate for the Gauss Newton algorithm can be chosen heuristically or the closed-form solutions described in Examples 1 - 5 can be used.
In the non-separable case, the new Jacobian matrix $J$ is the M × 6 Jacobian matrix of $f(C)$, i.e.,

$$J = [J_i], \ J_i = \frac{\partial f_n}{\partial c_i}, \text{where } i \ = \ 1, \dots, 6$$

The columns of *J* are:

$$J_1 = \frac{\partial f_n}{\partial a} = 1 + \alpha_x \cos(\phi_{x,n}) + \beta_x \sin(\phi_{x,n}) + \alpha_y \cos(\phi_{y,n}) + \beta_y \sin(\phi_{y,n})$$
$$+ b\,\alpha_x\alpha_y \cos(\phi_{y,n})\cos(\phi_{x,n}) + b\,\beta_x\beta_y \sin(\phi_{y,n})\sin(\phi_{x,n})$$
$$+ b\,\alpha_x\beta_y \sin(\phi_{y,n})\cos(\phi_{x,n}) + b\,\beta_x\alpha_y \cos(\phi_{y,n})\sin(\phi_{x,n})$$

$$(33)$$

$$J_2 = \frac{\partial f_n}{\partial \alpha_x} = a\big(cos(\phi_{x,n}) + b\,\alpha_y\cos(\phi_{y,n})\cos(\phi_{x,n})$$
$$+ b\,\beta_y\,sin(\phi_{y,n})\,cos(\phi_{x,n})\big)$$

$$J_3 =$$
$$\frac{\partial f_n}{\partial \alpha_y} = a\big(\cos(\phi_{y,n}) + b\,\alpha_x\cos(\phi_{y,n})\cos(\phi_{x,n}) + b\,\beta_x\cos(\phi_{y,n})\sin(\phi_{x,n})\big)$$

$$J_4 = \frac{\partial f_n}{\partial \beta_x} = a\big(\sin(\phi_{x,n}) + b\,\alpha_y\cos(\phi_{y,n})\sin(\phi_{x,n})$$
$$+ b\,\beta_y\sin(\phi_{y,n})\sin(\phi_{x,n})\big)$$

$$J_5 = \frac{\partial f_n}{\partial \beta_y} = a\big(sin(\phi_{y,n}) + b\,\alpha_x\,sin(\phi_{y,n})\,cos(\phi_{x,n})$$
$$+ b\,\beta_x\,sin(\phi_{y,n})\,sin(\phi_{x,n})\big)$$

$$J_6 = \frac{\partial f_n}{\partial b} = a\big(\alpha_x\alpha_y\,cos(\phi_{y,n})\,cos(\phi_{x,n}) + \beta_x\beta_y\,sin(\phi_{y,n})\,sin(\phi_{x,n})$$
$$+ \alpha_x\beta_y\,sin(\phi_{y,n})\,cos(\phi_{x,n}) + \beta_x\alpha_y\,cos(\phi_{y,n})\,sin(\phi_{x,n})\big)$$

Depending on the number of phase steps used in step 110 of Fig. 2, the value of *M* can be any integer greater than 4.

### Example 13: Non-linear demodulation with fixed cross term

With a specific grating configuration, it is possible to estimate the amplitude b of the cross term in Equation (32) assuming that the relative strength of the cross term is known. In this embodiment, the parameters to estimate remain the same as Embodiment 7. Similar to Embodiment 7, Gauss-Newton algorithm is used to obtain an optimum estimate in the minimum mean square sense. The initial estimate for the Gauss Newton algorithm can be chosen heuristically, or the closed-form solutions described in Embodiment 1 - 5 can be used.

The Jacobian matrix $J$ for this embodiment is the M $\times$ 5 Jacobian matrix of f (C), i.e.,

$$J = [J_i], \quad J_i = \frac{\partial f_n}{\partial c_i}, \text{ where } i = 1, \dots, 5$$

The columns of $J$ are:

$$J_1 = \frac{\partial f_n}{\partial a} = 1 + \alpha_x \cos(\phi_{x,n}) + \beta_x \sin(\phi_{x,n}) + \alpha_y \cos(\phi_{y,n}) + \beta_y \sin(\phi_{y,n})$$
$$+ b \, \alpha_x \alpha_y \cos(\phi_{y,n}) \cos(\phi_{x,n}) + b \, \beta_x \beta_y \sin(\phi_{y,n}) \sin(\phi_{x,n})$$
$$+ b \, \alpha_x \beta_y \sin(\phi_{y,n}) \cos(\phi_{x,n}) + b \, \beta_x \alpha_y \cos(\phi_{y,n}) \sin(\phi_{x,n})$$

$$J_2 = \frac{\partial f_n}{\partial \alpha_x} = a\big(cos(\phi_{x,n}) + b \, \alpha_y \, cos(\phi_{y,n}) \, cos(\phi_{x,n})$$
$$+ b \, \beta_y \, sin(\phi_{y,n}) \, cos(\phi_{x,n})\big)$$

$$J_3 =$$
$$\frac{\partial f_n}{\partial \alpha_y} = a\big(\cos(\phi_{y,n}) + b \, \alpha_x \cos(\phi_{y,n}) \cos(\phi_{x,n}) + b \, \beta_x \cos(\phi_{y,n}) \sin(\phi_{x,n})\big) \tag{34}$$

$$J_4 = \frac{\partial f_n}{\partial \beta_x} = a\big(\sin(\phi_{x,n}) + b \, \alpha_y \cos(\phi_{y,n}) \sin(\phi_{x,n})$$
$$+ b \, \beta_y \sin(\phi_{y,n}) \sin(\phi_{x,n})\big)$$

$$J_5 =$$
$$\frac{\partial f_n}{\partial \beta_y} = a\big(sin(\phi_{y,n}) + b \, \alpha_x sin(\phi_{y,n}) \, cos(\phi_{x,n}) + b \, \beta_x sin(\phi_{y,n}) \, sin(\phi_{x,n})\big)$$

Depending on the number of phase steps used in step 110 of Fig. 2, the value of *M* can be any integer greater than 4. This example demostrates that where the fringe pattern interferogram image comprises a crossed term varying in both dimensions, the amplitude of the crossed term can be estiomated independently using data about grating configuration, and the determined amplitude is used to revise the parameter estimates

**Conclusion**

The examples provide processing of a number of moiré fringe pattern images obtained using a phase shifting technique for the estimation of the phase and modulation parameters, being an absorption parameter $(a)$, amplitude modulation parameters $(m_x, m_y)$ and phase modulation parameters $(\xi_x, \xi_y)$ caused by the object. These parameters are recovered independently for each pixel location in the image sequence and when considered as images and corrected for the carrier frequency of the moiré patterns according to equation (13) provide differential path length images $\left(\frac{\partial \psi}{\partial x}, \frac{\partial \psi}{\partial y}\right)$ of the object (402,1324), potentially revealing detail of the object not otherwise discernible from the individual x-ray images or the fringe pattern images.

The parameters each provide for corresponding representation by specific images. The specific images comprise:

(i) a first phase image being a first differential phase at each (x,y) location of the moiré images, as expressed by the term $(\xi_x)$ in Equation (7);
(ii) a second phase image being a second differential phase at each (x,y) location of the moiré images, as expressed by the term $(\xi_y)$ in Equation (7);
(iii) a first modulation image being a first modulation at each (x,y) location of the moiré images, as expressed by the term $(m_x)$ in Equation (7);
(iv) a second modulation image being a second modulation at each (x,y) location of the moiré images, as expressed by the term (my) in Equation (7); and
(v) a background (absorption) image representative of the x-ray absorption of the object, as expressed by the term $(a)$ in Equation (6).

According to the present disclosure, there are at least 5 and no more than 8 moiré images are captured in step 110 and processed in step 102. For X-ray applications, a reduction in the number of captured images is advantageous in that such reduces the exposure of the object (potentially a living organism) to X-ray radiation, and also reduces the collective data set that needs to be processed, thus generally reducing communication and computational time and costs.

The specific images, and particularly the phase images, may be used in isolation to reveal detail of the object not otherwise discernible from traditional x-ray methods, whilst the set of specific images may be used collectively for the full reconstruction of a phase image of the object. The images may be displayed on the display device 1314.

For the processing steps described, the closed form approach can be used to derive a quick solution, but one that is subject to phase step errors. The iterative approach is significantly slower but by its very nature can accommodate phase step errors. The two approaches may be used in combination, where the closed form approach is initially used to quickly obtain a starting point for the iterative approach, which then provides a refined solution whilst avoiding unnecessary iterations. The result is an optimal set of specific images obtained using reasonable computing resources.

**Industrial Applicability**

The arrangements described are applicable to the computer and data processing industries and particularly for the X-ray imaging of objects. The arrangements are particularly applicable for the imaging of soft tissue to identify damage and the like, and potentially provide an alternative to MRI and CAT scans using less-expensive X-ray equipment supplemented by image processing.

The foregoing describes only some embodiments of the present invention, and modifications and/or changes can be made thereto without departing from the scope and spirit of the invention, the embodiments being illustrative and not restrictive.

**Claims**

1. A method (100) of reconstructing a representative detailed phase image from a set of fringe pattern interferogram images of an object captured by an x-ray interferometer (1399) having a crossed diffraction grating (410,430), said method comprising:

providing (110) the set of captured fringe pattern interferogram images from the x-ray interferometer, said set comprising no more than eight captured fringe pattern interferogram images;

determining (120,220) an estimate of an absorption parameter ($a$), two-dimensional amplitude modulation parameters ($m_x$, $m_y$), and two-dimensional phase modulation parameters ($\xi_x$ and $\xi_y$) from a closed-form solution using the received set of captured fringe pattern interferogram images; and

reconstructing (130) the representative detailed phase image using the parameter estimates.

2. The method of claim 1, further comprising the determining step revising the parameter estimates.

3. The method of claim 2, wherein the parameter estimates for each pixel are revised by generating a simulated set of fringe intensities for that pixel and comparing the simulated set of fringe intensities with the set of captured fringe intensities at that pixel.

4. The method of claim 2, wherein the parameter estimates for each pixel are revised by generating a simulated set of fringe intensities for that pixel and minimising an error in corresponding pixels in the simulate set of fringe intensities and the set of captured fringe intensities.

5. The method of claim 1 the determining step (220) comprises:

obtaining (310) an initial estimate of the parameters;
using (320) a phase estimation method to correct phase step errors in the parameters; and
iteratively (330) determining an optimal solution (Eqn 27) for the parameters using the corrected phase steps.

6. The method of claim 1 wherein the set comprises 5 captured fringe pattern interferogram images and the phase steps of the crossed diffraction grating are $\phi_x$: [0, 2π/5, 4π/5, 6π/5, 8π/5] and $\phi_y$: [0, 6π/5, 2π/5, 8π/5, 4π/5].

7. The method of claim 1 wherein the set comprises 6 captured fringe pattern interferogram images and the phase steps of the crossed diffraction grating are $\phi_x$: [0, π/2, π/2, π, π, 3π/2] and $\phi_y$: [π/2, 0, π, π/2, 3π/2, π].

8. The method of claim 1 wherein the set comprises 7 captured fringe pattern interferogram images and the phase steps of the crossed diffraction grating are $\phi_x$: [0, π/2, π, 3π/2, 0, π/2, π] and $\phi_y$: [0, 3π/2, π, π/2, π, π/2, 0].

9. The method of claim 1 wherein the set comprises 8 images captured fringe pattern interferogram images and the phase steps of the crossed diffraction grating are $\phi_x$: [0, π/2, π, 3π/2, 0, π/2, π, 3π/2] and $\phi_y$: [0, 3π/2, π, π/2, π, π/2, 0, 3π/2].

10. The method of claim 2, wherein the fringe pattern interferogram image comprises a crossed term varying in both dimensions.

11. The method of claim 10, further comprises estimating (Example 13) an amplitude of the crossed term independently using data about grating configuration, wherein the determined amplitude is used to revise the parameter estimates.

12. A method of reconstructing a representative detailed phase image from a set of fringe pattern interferogram images of an object captured by an x-ray interferometer having a crossed diffraction grating, said method comprising:

providing a set of captured images;
providing a reconstruction technique capable of reconstructing the image from no more than eight images by relating cross components associated with the fringe pattern to the principle components associated with the fringe pattern; and
reconstructing the representative detailed phase image from the provided set of captured images using the provided reconstruction technique.

13. A computer readable storage medium having a program recorded thereon, the program being executable by a computer to reconstruct a representative detailed phase image from a set of fringe pattern interferogram images of an object captured by an x-ray interferometer (1399) having a crossed diffraction grating (410,430), said program comprising:

code for providing (110) the set of captured fringe pattern interferogram images from the x-ray interferometer, said set comprising no more than eight captured fringe pattern interferogram images;
code for determining (120,220) an estimate of an absorption parameter (*a*), two-dimensional amplitude modulation parameters *(m_x, m_y)*, and two-dimensional phase modulation parameters ($\xi_x$ and $\xi_y$) from a closed-form solution (Examples 1 to 5) using the received set of captured fringe pattern interferogram images;
code for reconstructing (130) the representative detailed phase image using the parameter estimates.

14. A computer readable storage medium having a program recorded thereon , the program being executable by a computer to reconstruct a representative detailed phase image from a set of fringe pattern interferogram images of an object captured by an x-ray interferometer having a crossed diffraction grating, said program comprising:

code for providing a set of captured images;
code for providing a reconstruction technique capable of reconstructing the image from no more than eight images by relating cross components associated with the fringe pattern to the principle components associated with the fringe pattern; and
code for reconstructing the representative detailed phase image from the provided set of captured images using the provided reconstruction technique.

15. Apparatus comprising:

an X-ray interferometer system having a crossed diffraction grating;
a computer system coupled to the interferometer system and configured with the interferometer system to:

capture (110) a set of fringe pattern interferogram images from the interferometer system, said set comprising no more than eight captured fringe pattern interferogram images;
determine (120,220) an estimate of an absorption parameter (*a*), two-dimensional amplitude modulation parameters *(m_x, my)*, and two-dimensional phase modulation parameters ($\xi_x$ and $\xi_y$) from a closed-form solution (Examples 1 to 5) using the received set of captured fringe pattern interferogram images;
reconstruct (130) the representative detailed phase image using the parameter estimates; and
display the phase image upon a display device.

16. Apparatus comprising:

an X-ray interferometer system having a crossed diffraction grating;
a computer system coupled to the interferometer system and configured with the interferometer system to:

provide a set of captured images including fringe patterns;
provide a reconstruction technique capable of reconstructing the image from no more than eight images by relating cross components associated with the fringe pattern to the principle components associated with the fringe pattern;
reconstruct the representative detailed phase image from the provided set of captured images using the provided reconstruction technique; and
display the phase image upon a display device.

100

Start

Capture the fringe pattern
interferogram images

110

Determine an estimate of
the parameters from a
closed form solution

120

Reconstruct the phase
image using estimated
parameters

130

199

End

# Fig. 1

200

Start

Capture the fringe pattern
interferogram images

110

Determine an estimate of the
parameters from an iterative
solution

220

Reconstruct the phase
image using estimated
parameters

130

299

End

# Fig. 2

220

```
        ┌─────────┐
        │  Start  │
        └────┬────┘
             │
             ▼
  ┌──────────────────────┐
  │ Obtain an initial     │ ⌇ 310
  │ estimate of           │
  │ the parameters        │
  └──────────┬───────────┘
             │
             ▼
  ┌──────────────────────┐
  │ Use phase estimation  │ ⌇ 320
  │ method to correct phase│
  │ step errors           │
  └──────────┬───────────┘
             │
             ▼
  ┌──────────────────────┐
  │ Solve iteratively for │ ⌇ 330
  │ an optimum solution of │
  │ the parameters using   │
  │ corrected phase steps  │
  └──────────┬───────────┘
             │            399
             ▼
        ┌─────────┐
        │   End   │
        └─────────┘
```

# Fig. 3

**Fig. 4**

**Fig. 5A**

510

**Fig. 5B**

520

**Fig. 5C**

530

110

Start

Capture a fringe pattern interferogram image    610

Spatially shift the grating    620

Capture a fringe pattern interferogram image    630

All phase shifts completed?    640

No

Yes

Output the fringe pattern interferogram images and the nominal phase steps    650

699

End

**Fig. 6**

EP 2 746 754 A2

X →

Y ↓

| | 0 | 2π/9 | 4π/9 | 6π/9 | 8π/9 | 10π/9 | 12π/9 | 14π/9 | 16π/9 |
|---|---|---|---|---|---|---|---|---|---|
| 0 | 0 | | | 3 | | | 6 | | |
| 2π/9 | | | | | | | | | |
| 4π/9 | | | | | | | | | |
| 6π/9 | | 1 | | | 4 | | | 7 | |
| 8π/9 | | | | | | | | | |
| 10π/9 | | | | | | | | | |
| 12π/9 | | | 2 | | | 5 | | | 8 |

**Fig. 7**

| Y \ X | 0 | 2π/8 | 4π/8 | 6π/8 | π | 10π/8 | 12π/8 | 14π/8 |
|---|---|---|---|---|---|---|---|---|
| 0 | 0 | | | | | | | |
| 2π/8 | | | | 3 | | | | |
| 4π/8 | | | | | | | 6 | |
| 6π/8 | | 1 | | | | | | |
| π | | | | | 4 | | | |
| 10π/8 | | | | | | | | 7 |
| 12π/8 | | | 2 | | | | | |
| 14π/8 | | | | | | 5 | | |

# Fig. 8

X →

|  | 0 | π/2 | π | 3π/2 |
|---|---|---|---|---|
| 0 | 0 |  | 6 |  |
| π/2 |  | 5 |  | 3 |
| π | 4 |  | 2 |  |
| 3π/2 |  | 1 |  | 7 |

Y ↓

## Fig. 9

X →

|  | 0 | π/2 | π | 3π/2 |
|---|---|---|---|---|
| 0 | 0 |  | 6 |  |
| π/2 |  | 5 |  | 3 |
| π | 4 |  | 2 |  |
| 3π/2 |  | 1 |  |  |

Y ↓

## Fig. 10

X →

| Y | 0 | π/2 | π | 3π/2 |
|---|---|---|---|---|
| 0 |   | 1 |   |   |
| π/2 | 0 |   | 3 |   |
| π |   | 2 |   | 5 |
| 3π/2 |   |   | 4 |   |

## Fig. 11

X →

| Y | 0 | 2π/5 | 4π/5 | 6π/5 | 8π/5 |
|---|---|---|---|---|---|
| 0 | 0 |   |   |   |   |
| 2π/5 |   |   | 2 |   |   |
| 4π/5 |   |   |   |   | 4 |
| 6π/5 |   | 1 |   |   |   |
| 8π/5 |   |   |   | 3 |   |

## Fig. 12

**Fig. 13A**

Fig. 13B

**EP 2 746 754 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2012268876